# EUROPÄISCHE PATENTSCHRIFT

(11) **EP 3 685 001 B1**
(45) Veröffentlichungstag und Bekanntmachung des Hinweises auf die Patenterteilung: **15.01.2025**
(21) Anmeldenummer: 18773739.0
(22) Anmeldetag: 18.09.2018
(51) Int. Cl.: E05F 15/44, E05F 15/48

(54) **VORRICHTUNG ZUM EINKLEMMSCHUTZ FÜR EINE TÜR FÜR EIN FAHRZEUG, TÜRSYSTEM FÜR EIN FAHRZEUG UND VERFAHREN ZUM HERSTELLEN EINER VORRICHTUNG ZUM EINKLEMMSCHUTZ FÜR EINE TÜR FÜR EIN FAHRZEUG**
DEVICE FOR PROTECTION AGAINST ENTRAPMENT FOR A DOOR FOR A VEHICLE, DOOR SYSTEM FOR A VEHICLE AND METHOD FOR PRODUCING A DEVICE FOR PROTECTION AGAINST ENTRAPMENT FOR A DOOR FOR A VEHICLE
DISPOSITIF DE PROTECTION CONTRE LE PINCEMENT POUR UNE PORTIÈRE POUR UN VÉHICULE, SYSTÈME DE PORTIÈRE POUR UN VÉHICULE ET PROCÉDÉ DE FABRICATION D'UN DISPOSITIF DE PROTECTION CONTRE LE PINCEMENT POUR UNE PORTIÈRE POUR UN VÉHICULE

(30) Priorität: 19.09.2017 DE 102017121680; 17.01.2018 DE 102018100945
(43) Veröffentlichungstag der Anmeldung: 29.07.2020
(73) Patentinhaber: Knorr-Bremse Gesellschaft mit beschränkter Haftung, 2340 Mödling (AT)
(72) Erfinder: HIRTENLEHNER, Thomas, 3354 Wolfsbach (AT); JETZINGER, Peter, 4470 Enns (AT); SCHAFFER, Helmut, 4841 Ungenach (AT)
(74) Vertreter: Aurigium Leischner & Luthe
(86) Internationale Anmeldenummer: PCT/EP2018/075171
(87) Internationale Veröffentlichungsnummer: WO 2019/057695

(56) Entgegenhaltungen:
- EP-A1- 0 791 716
- EP-A2- 2 532 820
- EP-B1- 0 791 716
- DE-A1- 102010 046 632

## Beschreibung

Die vorliegende Erfindung bezieht sich auf eine Vorrichtung zum Einklemmschutz für eine Tür für ein Fahrzeug, auf ein Türsystem für ein Fahrzeug und auf ein Verfahren zum Herstellen einer Vorrichtung zum Einklemmschutz für eine Tür für ein Fahrzeug.

Zur Verhinderung eines Einklemmens und möglicherweise sogar Mitschleifens einer Person durch eine Tür eines Fahrzeugs sind bisher meist Detektionsmöglichkeiten bekannt, bei denen eine Sensorik, wie zum Beispiel Schaltleisten, nach einer Extrusion eines Fingerschutzprofiles eingebaut wird.

Die DE 10 2010 046 632 A1 betrifft eine Dichtleistenanordnung für eine Tür mit einer ersten, wenigstens abschnittsweise gummielastischen Profilleiste und einer zweiten, wenigstens abschnittsweise gummielastischen Profilleiste, wobei wenigstens eine der Profilleisten eine Hohlkammer zur Aufnahme einer elektrischen Schaltleiste aufweist, wobei die Profilleisten jeweils wenigstens einen Vorsprung aufweisen, wobei die Vorsprünge mit der Hohlkammer jeweils über einen Betätigungssteg verbunden sind, der mit der Wandung der Hohlkammer im Bereich der Mittelebene der Hohlkammer verbunden ist. In der EP 2 532 820 A2 ist ein Hohlprofil für eine elektrische Schaltleiste gezeigt, wobei angrenzend an einen in Längsrichtung des elastischen Hohlprofils durchgehenden Hohlraum des Hohlprofils wenigstens ein erster und ein zweiter elektrischer Leiter vorgesehen sind, wobei zum Ausgeben von richtungsselektiven Schaltsignalen wenigstens ein an den Hohlraum angrenzender Bereich des wenigstens einen ersten und/oder zweiten Leiters in einer Schnittansicht senkrecht zur Längsrichtung gesehen, relativ zu einer Mittelebene des Hohlprofils versetzt angeordnet ist.

Vor diesem Hintergrund ist es die Aufgabe der vorliegenden Erfindung, eine verbesserte Vorrichtung zum Einklemmschutz für eine Tür für ein Fahrzeug, ein verbessertes Türsystem für ein Fahrzeug und ein verbessertes Verfahren zum Herstellen einer Vorrichtung zum Einklemmschutz für eine Tür für ein Fahrzeug zu schaffen.

Diese Aufgabe wird durch eine Vorrichtung zum Einklemmschutz für eine Tür für ein Fahrzeug, durch ein Türsystem für ein Fahrzeug durch und ein Verfahren zum Herstellen einer Vorrichtung zum Einklemmschutz für eine Tür für ein Fahrzeug gemäß den Hauptansprüchen gelöst.

Erfindungsgemäß wird ein mit einem Extrusionsprofil mit extrudiertes bzw. in ein Extrusionsprofil integriertes Schaltelement für integrierten Einklemmschutz bzw. integrierte Einklemmerkennung bereitgestellt. Im Gegensatz zu Detektionsmöglichkeiten für Einklemmschutz, bei denen eine Sensorik nach einer Extrusion eines Fingerschutzprofils eingebaut wird, kann bei der Vorrichtung ein Schaltelement bereits direkt in das Extrusionsprofil integriert bzw. mit dem Extrusionsprofil extrudiert werden. Dabei kann das Extrusionsprofil insbesondere Regionen mit erhöhter Steifigkeit und Regionen mit verringerter Steifigkeit sowie eine spezifisch ausgelegte Geometrie aufweisen, um eingeklemmte Objekte sicher erkennen zu können. Somit kann beispielsweise eine Wahrscheinlichkeit für ein Einklemmen oder gar Mitschleifen einer Person durch ein anfahrendes Fahrzeug gesenkt werden. Hierbei kann insbesondere eine zuverlässige Detektion von Tüchern realisiert werden.

Vorteilhafterweise kann eine integrale Bauweise realisiert werden, die eine Reduktion von Bauteilen ermöglicht, da mehrere Funktionen, wie der Einklemmschutz, die Einklemmerkennung und der "Einklemmschmerz" in einem Bauteil verschmolzen sind. Es ergibt sich ein einfaches Funktionsprinzip durch ein abgekapseltes wartungsfreies System, das unempfindlich gegen äußere Einflüsse ist. Eine Auswertung mit bestehenden Türsteuerungen ist möglich. Ein Funktionsausfall kann detektiert werden und es ergibt sich eine erhöhte Vandalismus-Sicherheit. Ferner kann die Vorrichtung aufgrund eines mit ausgeformten Montagestegs auf einfache Weise an einer Tür montiert werden. Auch können insbesondere bei zweiflügeligen Türen durch jeweils eine Vorrichtung an jedem Türflügel somit zwei gleichwertige Schaltleisten bzw. Formteile realisiert werden, welche beide bei den geforderten definierten Ereignissen, wie zum Beispiel einem Einklemmen eines Quaders oder anderen dreidimensionalen Objekts wie auch eines Tuches, zu unterschiedlichen Zeitpunkten und zuverlässig schalten und somit auch eine Wahrscheinlichkeit eines Mitschleifens durch sichere und rechtzeitige Detektion reduzieren können.

Eine erfindungsgemäße Vorrichtung zum Einklemmschutz für eine Tür für ein Fahrzeug weist die Merkmale des unabhängigen Anspruchs 1 auf. Bei dem Fahrzeug kann es sich beispielsweise um ein Fahrzeug zur Personenbeförderung handeln. Insbesondere kann das Fahrzeug als ein Schienenfahrzeug ausgeführt sein. Das System kann ein Türsystem des Fahrzeugs sein. Die Vorrichtung kann auch als eine Fingerschutzleiste bezeichnet werden. Die Merkmale des Extrusionsprofils können durchgehend mit extrudierbar sein. Die Türflügelwand und die Dichtungswand können zueinander parallele oder annähernd parallele Erstreckungsebenen aufweisen. Das Extrusionsprofil kann eine Extrusionsachse aufweisen, die sich entlang der Erstreckungsebenen und normal zu der Querachse erstrecken kann. Das Schaltelement kann ein elektrisch leitfähiges Material und zumindest zwei elektrische Leiter aufweisen. Alternativ, aber nicht erfindungsgemäß, kann das Schaltelement zumindest einen Lichtwellenleiter oder andere zum Erfassen der Kompression geeignete Einrichtungen aufweisen. Erfindungsgemäß ist der Schaltstößel ausgebildet, um bei Kontakt mit einem eingeklemmten Objekt in eine Bewegung mit zumindest einer Bewegungskomponente entlang der Querachse und zusätzlich oder alternativ mit zumindest einer Bewegungskomponente quer zu der Querachse versetzt zu werden. Über den Schaltstößel ist die Kompressionskraft auf das Schaltelement übertragbar. Der Schaltstößel kann sich über seine gesamte Länge oder abschnittsweise entlang der Querachse erstrecken. Das zumindest eine Schaltelement ist erfindungsgemäß in das Extrusionsprofil integriert und somit mit dem Extrusionsprofil extrudierbar und ablängbar.

Gemäß einer Ausführungsform kann die Vorrichtung einen Montagesteg aufweisen. Der Montagesteg kann sich entlang der Querachse des Extrusionsprofils erstrecken. Dabei können die Türflügelwand und die Dichtungswand über den Montagesteg miteinander verbunden sein. Hierbei kann der Montagesteg entlang einer Erstreckungsebene der Dichtungswand relativ zu dem Schaltstößel versetzt angeordnet sein. Der Montagesteg kann normal bezüglich der Erstreckungsebenen ausgerichtet sein. Der Montagesteg kann sich über seine gesamte Länge oder abschnittsweise entlang der Querachse erstrecken. Zwischen der Türflügelwand und der Dichtungswand kann das Extrusionsprofil einen Hohlraum aufweisen, der zumindest durch den Montagesteg in mindestens zwei Kammern unterteilt sein kann. Eine solche Ausführungsform bietet den Vorteil, dass eine Steifigkeit des Extrusionsprofils erhöht werden kann und bei einer Montage der Vorrichtung an der Tür ein Kraftfluss an dem Schaltelement vorbeigeleitet werden kann.

Alternativ kann das Extrusionsprofil als ein Vollprofil ausgeformt sein. Dabei kann ein Volumen des Extrusionsprofils zwischen der Türflügelwand und der Dichtungswand vollständig oder zumindest teilweise von dem Elastomermaterial ausgeführt sein. Eine solche Ausführungsform bietet den Vorteil, dass eine Steifigkeit des Extrusionsprofils erhöht werden kann und bei einer Montage der Vorrichtung an der Tür ein Kraftfluss an dem Schaltelement vorbeigeleitet werden kann.

Erfindungsgemäß weist das Schaltelement einen ersten elektrisch leitfähigen Abschnitt und einen zweiten elektrisch leitfähigen Abschnitt auf, die von einem durch die Kompressionskraft komprimierbaren Zwischenraum voneinander getrennt sind. Jeder elektrisch leitfähige Abschnitt kann eine elektrisch leitfähiges Material und zumindest einen elektrischen Leiter aufweisen. Eine solche Ausführungsform bietet den Vorteil, dass die Kompression auf einfache und sichere Weise detektiert werden kann. Dabei kann der erste Abschnitt im Bereich des Schaltstößels der Türflügelwand zugewandt an der Dichtungswand angeordnet sein. Der zweite Abschnitt kann bezogen auf die Querachse zwischen dem ersten Abschnitt und der Türflügelwand angeordnet sein. Alternativ kann sich der durch die Kompressionskraft komprimierbare Zwischenraum entlang der Querachse erstrecken. Eine solche Ausführungsform bietet den Vorteil, dass die elektrisch leitfähigen Abschnitte je nach Anforderung geeignet ausgeformt werden können. Dabei kann erreicht werden, dass das Schaltelement beispielsweise nur dann schaltet, wenn eine Kraft in vordefinierter Richtung auf den Schaltstößel wirkt.

Auch kann dabei der zweite Abschnitt des Schaltelements an einer Zwischenwand oder als ein Teilabschnitt einer Zwischenwand zwischen der Dichtungswand und der Türflügelwand angeordnet sein. Hierbei kann die Zwischenwand mit dem Montagesteg und mit der Dichtungswand verbunden sein. Eine solche Ausführungsform bietet den Vorteil, dass bereits eine durch geringe Kompressionskräfte ausgelöste Kompression zuverlässig erfasst werden kann.

Ferner kann hierbei ein Verhältnis einer Abmessung des Schaltstößels entlang der Querachse zu einer Abmessung des ersten Abschnitts des Schaltelements entlang der Querachse einen vordefinierten Wert aufweisen. Eine solche Ausführungsform bietet den Vorteil, dass eine Empfindlichkeit einer Erfassung der Kompression je nach vorgesehenen Anwendungsfall der Vorrichtung durch das Verhältnis herstellungsseitig eingestellt werden kann.

Gemäß einer Ausführungsform kann das Extrusionsprofil eine Dichtfläche und ein Dichtelement aufweisen. Hierbei können die Dichtfläche und das Dichtelement mit der Dichtungswand verbunden sein und sich von der Türflügelwand weg erstrecken. Dabei kann der Schaltstößel zwischen der Dichtfläche und dem Dichtelement angeordnet sein. Anders ausgedrückt können die Dichtfläche und das Dichtelement als Vorsprungsabschnitte ausgeformt sein, die sich in Richtung von der Türflügelwand von der Dichtungswand weg erstrecken. Eine solche Ausführungsform bietet den Vorteil, dass ein komplementäres Zusammenwirken der Vorrichtung mit einer weiteren Vorrichtung erreicht werden kann. Ferner kann hierbei eine vorteilhafte Pressungstoleranz von zwei Vorrichtungen relativ zueinander entlang der Querrichtung erreicht werden. Bei einem komplementären Zusammenwirken können die Dichtfläche einer ersten Vorrichtung und das Dichtelement einer zweiten Vorrichtung zusammenwirken sowie das Dichtelement der ersten Vorrichtung und die Dichtfläche der zweiten Vorrichtung zusammenwirken.

Dabei kann die Dichtfläche eine Erstreckungsebene aufweisen, die parallel zu der Erstreckungsebene der Dichtungswand sein kann. Hierbei kann eine Abmessung der Dichtfläche quer zu der Querachse größer sein als ein vordefinierter, quer zu der Querachse zulässiger Versatz der Tür bezogen auf ein Referenzobjekt. Eine quere Ausrichtung kann auch eine orthogonale Ausrichtung aufweisen. Eine solche Ausführungsform bietet den Vorteil, dass auch bei einem Versatz einer Tür und somit eine an der Tür angebrachten Vorrichtung relativ zu einer Sollposition eine zuverlässige Abdichtung eines Türspalts erreicht werden kann.

Insbesondere kann dabei das Dichtelement als eine Dichtlippe, ein Dichtballon, ein Doppelballon und zusätzlich oder alternativ eine Doppellippe ausgeformt sein. Eine solche Ausführungsform bietet den Vorteil, dass eine sichere Abdichtung eines Türspalts erreicht werden kann.

Auch kann hierbei ein von der Dichtungswand abgewandtes Ende des Schaltstößels einen ersten Abstand zu der Dichtungswand aufweisen. Ferner kann ein von der Dichtungswand abgewandtes Ende des Dichtelements einen zweiten Abstand zu der Dichtungswand aufweisen. Zudem kann ein von der Dichtungswand abgewandtes Ende der Dichtfläche einen dritten Abstand zu der Dichtungswand aufweisen. Dabei kann der erste Abstand kleiner als der zweite Abstand und größer als der dritte Abstand sein. Alternativ kann der erste Abstand größer als der zweite Abstand und kleiner als der dritte Abstand sein. Wiederum alternativ können der erste Abstand, der zweite Abstand und der dritte Abstand innerhalb eines Toleranzbereichs gleich groß sein. Eine solche Ausführungsform bietet den Vorteil, dass eine Pressungstoleranz auch bei zuverlässiger Abdichtung eines Türspalts zumindest beibehalten werden kann. Ferner können die Abstände je nach Bedarf in geeigneter Weise gewählt werden.

Erfindungsgemäß weist die Vorrichtung zumindest ein Versteifungselement auf, wobei das Versteifungselement in das Extrusionsprofil integriert ist, und wobei das Versteifungselement in dem Schaltstößel und zusätzlich oder alternativ in einem zu der Dichtungswand benachbarten Teilabschnitt des Extrusionsprofils integriert ist. Das Versteifungselement ist als ein Metalldraht, Metallband oder dergleichen ausgeführt und fungiert als eine Schnittschutzeinrichtung, als eine Vandalismusschutzeinrichtung oder dergleichen. Eine solche Ausführungsform bietet den Vorteil, dass ein sicherer Schutz vor Beschädigung, mutwilliger Zerstörung, Vandalismus und dergleichen für die Vorrichtung auf einfache Weise bereitgestellt werden kann. Somit kann eine Einklemmerkennung auch nach einem Bestätigungsversuch noch geleistet werden. Das Versteifungselement kann zur Erhöhung der Steifigkeit zumindest eines Teilbschnittes des Extrusionsprofils dienen und kann daher auch einen Vandalismusschutz gegen ein Drücken eines Objekts quer zu der Querachse gegen das Extrusionsprofil bzw. einen Vandalismusschutz gegen Betätigung des Schaltelements durch Druck mit einem Objekt quer zu der Querachse bewirken.

Ferner kann das Extrusionsprofil einen Anbringungsabschnitt zum Anbringen der Vorrichtung an der Tür aufweisen. Hierbei kann der Anbringungsabschnitt mit der Türflügelwand verbunden sein und sich entlang der Querachse in Richtung von der Dichtungswand weg erstrecken. Insbesondere kann der Anbringungsabschnitt im Bereich des Montagestegs mit der Türflügelwand verbunden sein. Anders ausgedrückt können der Anbringungsabschnitt und der Montagesteg kollinear angeordnet sein. Eine solche Ausführungsform bietet den Vorteil, dass die Vorrichtung auf einfache und sichere Weise an einer Tür angebracht werden kann, bei eine Kompression des Extrusionsprofils im Bereich des zumindest einen Schaltelements vermieden werden kann.

Ein Türsystem für ein Fahrzeug weist folgende Merkmale auf:
eine Tür mit zumindest einem Türflügel, wobei an einer Stoßkante zumindest eines Türflügels eine Ausführungsform der vorstehend genannten Vorrichtung angeordnet ist.

In Verbindung mit dem Türsystem kann zumindest eine Vorrichtung, bei der sich um eine Ausführungsform der vorstehend genannten Vorrichtung handelt, vorteilhaft eingesetzt oder verwendet werden, um einen Einklemmschutz zu realisieren. Dabei kann eine Vorrichtung direkt an einem Türflügel der Tür, an einer Dichtung oder an einem Profilelement angebracht sein oder werden. Wenn die Tür mit zwei Türflügeln ausgeführt ist, kann an einem ersten Türflügel eine erste Vorrichtung angeordnet sein und kann an einem zweiten Türflügel eine zweite Vorrichtung angeordnet sein. Die erste Vorrichtung und zusätzlich oder alternativ die zweite Vorrichtung kann eine Ausführungsform der vorstehend genannten Vorrichtung sein. Auch kann die erste Vorrichtung relativ zu der zweiten Vorrichtung unterschiedlich ausgeformt sein.

Gemäß einer Ausführungsform kann das Türsystem auch zumindest ein Formteil aufweisen. Das Formteil kann als ein Übergang zwischen einer Türdichtung eines Türflügels der Tür zu der Vorrichtung fungieren. Dabei kann das Formteil mit dem Türflügel, mit der Türdichtung und zusätzlich oder alternativ mit der Vorrichtung verbindbar oder verbunden sein. Eine solche Ausführungsform bietet den Vorteil, dass mittels mindestens eines derartigen Formteils sowohl eine Pressung entlang der Querachse der Vorrichtung als auch ein Versatz quer zu der Querachse im Hinblick auf eine Bewegung der Türflügel reduziert bzw. eingeschränkt werden kann.

Ein erfindungsgemäßes Verfahren zum Herstellen einer Vorrichtung zum Einklemmschutz für eine Tür für ein Fahrzeug weist die in Anspruch 12 angegebenen Schritte auf.

Durch Ausführen des Verfahrens zum Herstellen ist eine Ausführungsform der vorstehend genannten Vorrichtung vorteilhaft herstellbar.

Gemäß einer Ausführungsform können der Schritt des Extrudierens und der Schritt des des Integrierens gemeinsam ausgeführt werden. Dabei kann das Schaltelement mit dem Elastomermaterial extrudiert werden. Eine solche Ausführungsform bietet den Vorteil, dass ein abgekapseltes wartungsfreies oder wartungsarmes sowie gegenüber schädlichen äußeren Einflüssen unempfindliches Bauteil bereitgestellt werden kann. Auch kann im Schritt des Integrierens das Schaltelement und zusätzlich oder alternativ ein weiteres Schaltelement auf das Elastomermaterial aufgedampft werden. Eine solche Ausführungsform bietet den Vorteil, dass Schaltelemente auf einfache und schnelle Weise je nach Bedarf ausgeformt werden können.

Ausführungsbeispiele der Erfindung werden in der nachfolgenden Beschreibung mit Bezug zu den Figuren näher erläutert. Es zeigen:
Fig. 1 eine schematische Darstellung eines Fahrzeugs mit einem Türsystem gemäß einem Ausführungsbeispiel;
Fig. 2 ein Ablaufdiagramm eines Verfahrens zum Herstellen einer erfindungsgemäßen Vorrichtung gemäß einem Ausführungsbeispiel;
Fig. 3 eine schematische Darstellung einer Vorrichtung gemäß einem Ausführungsbeispiel;
Fig. 4 eine schematische Darstellung einer Vorrichtung gemäß einem Ausführungsbeispiel;
Fig. 5 eine schematische Darstellung von Vorrichtungen gemäß einem Ausführungsbeispiel;
Fig. 6 eine schematische Darstellung von Vorrichtungen gemäß einem Ausführungsbeispiel;
Fig. 7 eine schematische Darstellung von Vorrichtungen gemäß einem Ausführungsbeispiel;
Fig. 8 eine schematische Darstellung von Vorrichtungen gemäß einem Ausführungsbeispiel;
Fig. 9 eine schematische Darstellung von Vorrichtungen gemäß einem Ausführungsbeispiel;
Fig. 10 eine schematische Darstellung eines Teilabschnitts einer Vorrichtung gemäß einem Ausführungsbeispiel;
Fig. 11 eine schematische Darstellung eines Teilabschnitts einer Vorrichtung gemäß einem Ausführungsbeispiel;
Fig. 12 eine schematische Darstellung eines Teilabschnitts einer Vorrichtung gemäß einem Ausführungsbeispiel;
Fig. 13 eine schematische Darstellung eines Teilabschnitts einer Vorrichtung gemäß einem Ausführungsbeispiel;
Fig. 14 eine schematische Darstellung von Vorrichtungen gemäß einem Ausführungsbeispiel;
Fig. 15 eine schematische Darstellung von Vorrichtungen gemäß einem Ausführungsbeispiel;
Fig. 16 eine schematische Darstellung eines Teilabschnitts einer Vorrichtung gemäß einem Ausführungsbeispiel;
Fig. 17 eine schematische Darstellung eines Teilabschnitts einer Vorrichtung gemäß einem Ausführungsbeispiel;
Fig. 18 eine schematische Darstellung einer Vorrichtung gemäß einem Ausführungsbeispiel;
Fig. 19 eine schematische Darstellung einer Vorrichtung gemäß einem Ausführungsbeispiel;
Fig. 20 eine schematische Darstellung von Formteilen gemäß einem Ausführungsbeispiel;
Fig. 21 eine schematische Darstellung von Formteilen gemäß einem Ausführungsbeispiel;
Fig. 22 eine schematische Darstellung von Formteilen gemäß einem Ausführungsbeispiel;
Fig. 23 eine schematische Darstellung von Formteilen gemäß einem Ausführungsbeispiel;
Fig. 24 eine schematische Darstellung einer Vorrichtung gemäß einem Ausführungsbeispiel;
Fig. 25 eine schematische Darstellung einer Vorrichtung gemäß einem Ausführungsbeispiel;
Fig. 26 eine schematische Darstellung einer Vorrichtung gemäß einem Ausführungsbeispiel;
Fig. 27 eine schematische Darstellung einer Vorrichtung gemäß einem Ausführungsbeispiel;
Fig. 28 eine schematische Darstellung einer Vorrichtung gemäß einem Ausführungsbeispiel; und
Fig. 29 eine schematische Darstellung einer Vorrichtung gemäß einem Ausführungsbeispiel.

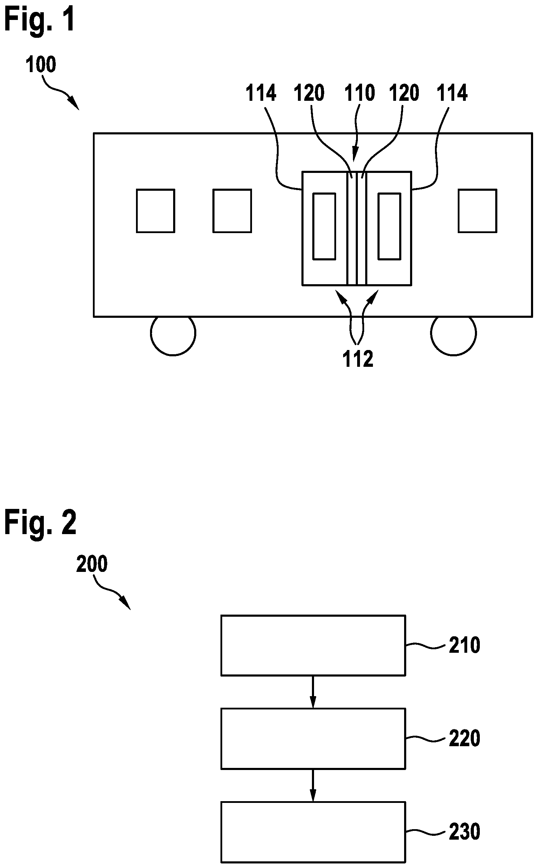

**Fig. 1** zeigt eine schematische Darstellung eines Fahrzeugs 100 mit einem Türsystem 110 gemäß einem Ausführungsbeispiel. Bei dem Fahrzeug 100 handelt es sich gemäß dem hier dargestellten Ausführungsbeispiel um ein Schienenfahrzeug. Das Türsystem 110 weist eine Tür 112 mit lediglich beispielhaft zwei Türflügeln 114 auf. Ferner weist das Türsystem 110 lediglich beispielhaft zwei Vorrichtungen 120 zum Einklemmschutz auf. Jede Vorrichtung 120 ist an einem eigenen Türflügel 114 angeordnet. Dabei sind die Vorrichtungen 120 an einander zugewandten Stoßkanten der Türflügel 114 angeordnet. Anders ausgedrückt ist durch die Vorrichtungen 120 oder unter anderem durch die Vorrichtungen 120 ein Türspalt zwischen den beiden Türflügeln 114 abgedichtet. Auf die Vorrichtung 120 wird unter Bezugnahme auf die nachfolgend beschriebenen Figuren noch detaillierter eingegangen.

Gemäß einem Ausführungsbeispiel sind die zwei Vorrichtungen 120 identisch ausgeführt und in einem geschlossenen Zustand der Tür 112 komplementär zueinander angeordnet. Gemäß einem anderen Ausführungsbeispiel können die Vorrichtungen 120 unterschiedlich ausgeformt und/oder ausgeführt sein. Hierbei können sich die Vorrichtungen 120 hinsichtlich eines Extrusionsprofils und/oder eines Schaltelements derselben voneinander unterscheiden. Beispielsweise kann lediglich eine der Vorrichtungen 120 ein Schaltelement aufweisen.

**Fig. 2** zeigt ein Ablaufdiagramm eines Verfahrens 200 zum Herstellen einer Vorrichtung zum Einklemmschutz für eine Tür für ein Fahrzeug gemäß einem Ausführungsbeispiel. Durch Ausführen des Verfahrens 200 ist jede der Vorrichtungen aus Fig. 1 und/oder eine Vorrichtung aus einer der nachfolgend beschriebenen Figuren herstellbar. Das Verfahren 200 weist einen Schritt 210 des Extrudierens, einen Schritt 220 des Integrierens und einen Schritt 230 des Ablängens auf.

In dem Schritt 210 des Extrudierens wird Elastomermaterial zu einem Extrusionsprofil extrudiert. Das Extrusionsprofil weist eine Türflügelwand, eine Dichtungswand und einen Schaltstößel auf. Die Türflügelwand ist in einem an der Tür montierten Zustand der Vorrichtung einer Stoßkante eines Türflügels der Tür zugewandt. Die Dichtungswand ist bezüglich der Türflügelwand gegenüberliegend angeordnet. Die Türflügelwand und die Dichtungswand weisen zueinander parallele oder näherungsweise parallele Erstreckungsebenen auf. Der Schaltstößel ist ausgebildet, um eine Kompressionskraft in das Extrusionsprofil zu übertragen. Der Schaltstößel ist an der Dichtungswand angeordnet und erstreckt sich entlang einer Querachse des Extrusionsprofils von der Türflügelwand weg.

In dem Schritt 220 des Integrierens wird zumindest ein Schaltelement zum Erfassen einer Kompression des Extrusionsprofils in das Extrusionsprofil integriert. Dabei wird das zumindest eine Schaltelement im Bereich des Schaltstößels zwischen der Türflügelwand und dem Schaltstößel angeordnet. Schließlich wird in dem Schritt 230 des Ablängens das Extrusionsprofil auf eine gewünschte Länge abgelängt. Dabei wird das Schaltelement mit dem Extrusionsprofil auf die Länge abgelängt.

Auch wenn es in der Darstellung von Fig. 2 nicht explizit gezeigt ist, werden gemäß einem Ausführungsbeispiel der Schritt 210 des Extrudierens und der Schritt 220 des Integrierens gemeinsam ausgeführt. Dabei wird das Schaltelement mit dem Elastomermaterial extrudiert. Optional wird im Schritt 220 des Integrierens das Schaltelement und/oder ein weiteres Schaltelement auf das Elastomermaterial aufgedampft.

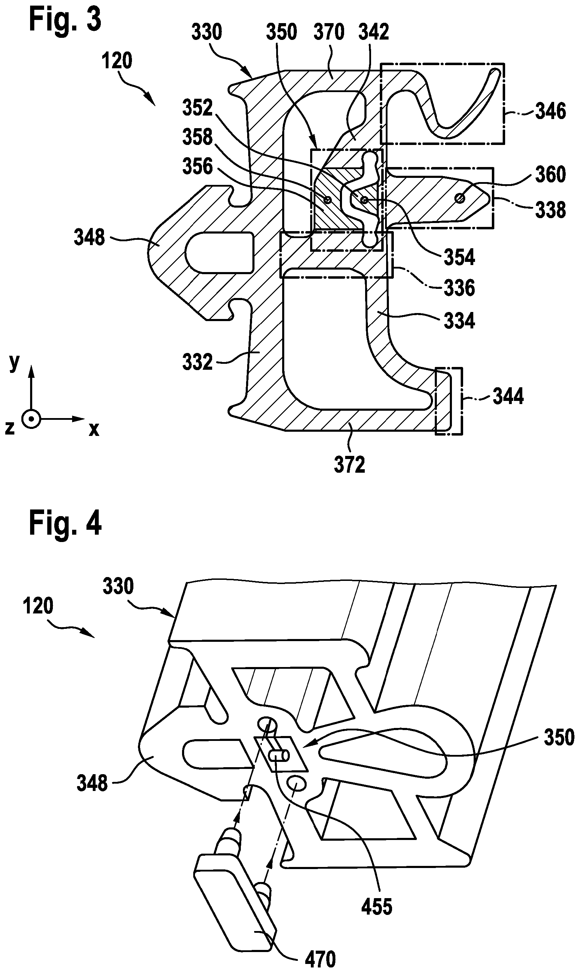

**Fig. 3** zeigt eine schematische Darstellung einer Vorrichtung 120 zum Einklemmschutz gemäß einem Ausführungsbeispiel. Die Vorrichtung 120 ist ausgebildet, um einen Einklemmschutz für eine Tür für ein Fahrzeug zu ermöglichen. Dabei ist die Vorrichtung 120 in Verbindung mit der Tür, dem Türsystem bzw. dem Fahrzeug einsetzbar oder verwendbar, wie es in Fig. 1 gezeigt ist. Anders ausgedrückt kann jede in Fig. 1 dargestellten Vorrichtung der in Fig. 3 gezeigten Vorrichtung 120 entsprechen oder ähneln.

Die Vorrichtung 120 weist ein Extrusionsprofil 330 und zumindest ein Schaltelement 350 auf. Das Extrusionsprofil 330 ist einstückig aus dem Elastomermaterial extrudiert. Dabei ist das zumindest eine Schaltelement 350 in das aus dem Elastomermaterial extrudierte Extrusionsprofil 330 integriert bzw. gemeinsam mit demselben extrudiert und abgelängt. Zur Orientierung sind in Fig. 3 auch eine x-Achse, eine y-Achse und eine z-Achse eines dreidimensionalen Koordinatensystems angegeben. Eine Extrusionsachse, entlang derer das Extrusionsprofil 330 extrudiert ist bzw. die eine Längserstreckungsachse der Vorrichtung 120 repräsentiert, entspricht der z-Achse in der Darstellung von Fig. 3.

Das Extrusionsprofil 330 weist eine Türflügelwand 332, eine Dichtungswand 334, einen Montagesteg 336 und einen Schaltstößel 338 auf. Die Türflügelwand 332 ist in einem an der Tür des Fahrzeugs montierten Zustand der Vorrichtung 120 einer Stoßkante eines Türflügels der Tür zugewandt. Die Dichtungswand 334 ist bezüglich der Türflügelwand 332 gegenüberliegend angeordnet. Die Türflügelwand 332 und die Dichtungswand 334 weisen zueinander parallele Erstreckungsebenen auf. Zwischen der Türflügelwand 332 und der Dichtungswand 334 ist ein Zwischenraum bzw. Hohlraum mit zumindest zwei Kammern angeordnet. Die Erstreckungsebenen der Türflügelwand 332 und der Dichtungswand 334 sind durch die y-Achse und die z-Achse aufgespannt bzw. definiert. Gemäß einem Ausführungsbeispiel sind die Erstreckungsebenen der Türflügelwand 332 und der Dichtungswand 334 zumindest abschnittsweise parallel oder annähernd parallel zueinander. Die Erstreckungsebenen der Türflügelwand 332 und der Dichtungswand 334 können auch abschnittsweise oder vollständig schräg zueinander ausgerichtet sein.

Der Montagesteg 336 repräsentiert einen Abschnitt des Extrusionsprofils 330 zum Erhöhen einer Steifigkeit des Extrusionsprofils 330. Der Montagesteg 336 erstreckt sich normal bezüglich der Erstreckungsebenen entlang einer Querachse des Extrusionsprofils 330. Die Querachse entspricht der x-Achse in Fig. 3. Die Türflügelwand 332 und die Dichtungswand 334 sind über den Montagesteg 336 miteinander verbunden. Auch ist durch den Montagesteg 336 der Hohlraum zwischen der Türflügelwand 332 und der Dichtungswand 334 zwei Kammern unterteilt. Gemäß einem Ausführungsbeispiel erstreckt sich der Montagesteg 336 schräg zu der Querachse.

Der Schaltstößel 338 ist an der Dichtungswand 334 angeordnet und erstreckt sich entlang der Querachse bzw. x-Achse in Richtung von der Türflügelwand 332 weg. Ferner ist der Schaltstößel 338 entlang der Erstreckungsebene der Dichtungswand 334 relativ zu dem Montagesteg 336 versetzt angeordnet. Anders ausgedrückt sind der Montagesteg 336 und der Schaltstößel 338 mit benachbarten Teilabschnitten auf unterschiedlichen Seiten der Dichtungswand 334 verbunden. Der Schaltstößel 338 ist ausgebildet, um eine Kompressionskraft in das Extrusionsprofil 320 und auf das Schaltelement 350 zu übertragen.

Gemäß dem in Fig. 3 dargestellten Ausführungsbeispiel weist die Vorrichtung 120 beispielhaft lediglich ein Schaltelement 350 auf. Das Schaltelement 350 ist im Bereich des Schaltstößels 338 zwischen der Türflügelwand 332 und dem Schaltstößel 338 angeordnet. Ein Teilabschnitt der Dichtungswand 334 ist zwischen dem Schaltstößel 338 und dem Schaltelement 350 angeordnet. Das Schaltelement 350 ist ausgebildet, um eine durch den Schaltstößel 338 in das Extrusionsprofil 330 übertragene Kompression des Extrusionsprofils 330 zu erfassen.

Das Schaltelement 350 weist gemäß dem in Fig. 3 gezeigten und beschriebenen Ausführungsbeispiel einen ersten elektrisch leitfähigen Abschnitt 352 mit einem ersten elektrischen Leiter 354 und einen zweiten elektrisch leitfähigen Abschnitt 356 mit einem zweiten elektrischen Leiter 358 auf. Der erste Abschnitt 352 und der zweite Abschnitt 356 sind von einem durch die Kompressionskraft komprimierbaren Zwischenraum voneinander getrennt. Der erste elektrische Leiter 354 ist in den ersten Abschnitt 352 eingebettet. Der zweite elektrische Leiter 358 ist in den zweiten Abschnitt 356 eingebettet. Der erste Abschnitt 352 und der zweite Abschnitt 356 sind aus einem elektrisch leitfähigen Material ausgeformt bzw. extrudiert.

Der erste Abschnitt 352 ist an der Dichtungswand 334 angeordnet. Genauer gesagt ist der erste Abschnitt 352 im Bereich des Schaltstößels 338 an einer der Türflügelwand 332 zugewandten Seite der Dichtungswand 334 angeordnet. Der zweite Abschnitt 356 ist bezogen auf die Querachse bzw. x-Achse zwischen dem ersten Abschnitt 352 und der Türflügelwand 332 angeordnet. Genauer gesagt ist der zweite Abschnitt 356 gemäß dem hier dargestellten Ausführungsbeispiel an einer Zwischenwand 342 bzw. als ein Teilabschnitt einer Zwischenwand 342 zwischen der Dichtungswand 334 und der Türflügelwand 332 ausgeführt bzw. ausgeformt. Die Zwischenwand 342 erstreckt sich zwischen dem Montagesteg 336 und der Dichtungswand 334. Auch ist die Zwischenwand 342 mit dem Montagesteg 336 und mit der Dichtungswand 334 verbunden.

Auch weist das Extrusionsprofil 330 gemäß dem in Fig. 3 dargestellten Ausführungsbeispiel eine Dichtfläche 344 und ein Dichtelement 346 auf. Die Dichtfläche 344 und das Dichtelement 346 sind mit der Dichtungswand 334 verbunden und erstrecken sich auf einer von der Türflügelwand 332 abgewandten Seite der Dichtungswand 334 in Richtung von der Türflügelwand 332 weg. Dabei ist der Schaltstößel 338 bezogen auf die Erstreckungsebene der Dichtungswand 334 zwischen dem Dichtelement 346 und der Dichtfläche 344 angeordnet. Die Dichtfläche 344 weist eine Erstreckungsebene auf, die parallel zu der Erstreckungsebene der Dichtungswand 334 und/oder parallel zu der Erstreckungsebene der Türflügelwand 332 ist. Das Dichtelement 346 ist als eine Dichtlippe ausgeformt. Somit sind die Dichtfläche 344 und das Dichtelement 346 als Vorsprungabschnitte des Extrusionsprofils 330 relativ zu der Dichtungswand 334 ausgeführt. Gemäß einem Ausführungsbeispiel weist die Dichtungswand 334 eine Biegung zu der Dichtfläche 344 hin auf. Das Dichtelement 346 ist beispielhaft S-förmig ausgeformt.

Gemäß dem in Fig. 3 dargestellten Ausführungsbeispiel ist ein von der Dichtungswand 334 abgewandtes Ende des Schaltstößels 338 in einem ersten Abstand von der Dichtungswand 334 angeordnet, ist ein von der Dichtungswand 334 abgewandtes Ende des Dichtelements 346 in einem zweiten Abstand zu der Dichtungswand 334 angeordnet und ist ein von der Dichtungswand 334 abgewandtes Ende der Dichtfläche 344 in einem dritten Abstand zu der Dichtungswand 334 angeordnet. Der erste Abstand ist kleiner als der zweite Abstand und größer als der dritte Abstand. Somit ragt das Dichtelement 346 am weitesten von der Dichtungswand 334 weg. Die Dichtfläche 344 ragt am wenigsten weit von der Dichtungswand 334 weg. So kann eine vorteilhafte Pressungstoleranz des Extrusionsprofils 330 bzw. der Vorrichtung 120 entlang der Querachse bzw. x-Achse erreicht werden.

Das Extrusionsprofil 330 weist gemäß dem in Fig. 3 gezeigten und beschriebenen Ausführungsbeispiel ferner einen Anbringungsabschnitt 348 auf. Mittels des Anbringungsabschnitts 348 ist die Vorrichtung 120 an der Tür des Fahrzeugs anbringbar. Der Anbringungsabschnitt 348 ist im Bereich des Montagestegs 336 mit der Türflügelwand 332 verbunden. Dabei erstreckt sich der Anbringungsabschnitt 348 auf einer von der Dichtungswand 334 abgewandten Seite der Türflügelwand 332 entlang der Querachse bzw. x-Achse in Richtung von der Dichtungswand 334 weg. Somit ist ein Teilabschnitt der Türflügelwand 332 zwischen dem Montagesteg 336 und dem Anbringungsabschnitt 348 angeordnet. Der Anbringungsabschnitt 348 weist einen pilzförmigen Querschnitt auf.

Wie in Fig. 3 dargestellt, weist die Vorrichtung 120 eine Schnittschutzeinrichtung 360 auf. Die Schnittschutzeinrichtung 360 ist als ein Metalldraht, Metallstab oder dergleichen ausgeführt. Gemäß dem hier dargestellten Ausführungsbeispiel ist die Schnittschutzeinrichtung 360 in dem Schaltstößel 338 integriert bzw. eingebettet angeordnet.

Anders ausgedrückt zeigt Fig. 3 einen Querschnitt der Vorrichtung 120 und somit des Extrusionsprofils 330 mit dem Schaltelement 350 zur integrierten Detektierung eingeklemmter Objekte. Nach einer Extrusion ist das entstehende Endlosmaterial je nach Bedarf in der gewünschten Länge abzuschneiden und sind elektrische, ggf. optische, Anschlüsse für das Schaltelement 350 anzubringen. Der Elastomer, z. B. EPDM oder Silicon, sollte definierte Brandschutzanforderungen (z.B. EN45545) erfüllen. Ein mitextrudiertes elektrisch leitendes Material der Abschnitte 352 und 356 des Schaltelements 350 kann unter anderem folgende elektrisch leitende Materialien aufweisen: Elastomere, z. B. EPDM oder Silikon, oder Elastomere, z. B. EPDM oder Silikon, in Kombination mit Metalldrähten. Alternativ kann z. B auch ein elektrischer Leiter oder ein Reflektor in einem weiteren Herstell-Prozessschritt als Schaltelement 350 aufgetragen werden, beispielsweise durch Aufdampfen. Als weitere Alternative kann anstelle elektrisch leitender Streifen ein Lichtwellenleiter bzw. ein Reflektor, eine Schaltleiste oder ein Bandschalter mitextrudiert bzw. nachträglich in das Extrusionsprofil 330 eingebracht werden. Der Montagesteg 336 ist ausgeformt, um eine Kraftwirkung bei einer Montage der Vorrichtung 120 an einer Tür derart zu lenken, dass der Kraftfluss umgeleitet bzw. an dem Schaltelement 338 vorbei geleitet wird. Eine durch den Montagesteg 336 bereitgestellte erhöhte Steifigkeit begünstigt sowohl die Montage an einen Türflügel, als auch eine Funktion von Sicherheitseinrichtungen, beispielsweise eine Detektion von Hindernissen oder dergleichen.

Gemäß einem Ausführungsbeispiel weist das Extrusionsprofil 330 eine erste Außenwand 370 und eine zweite Außenwand 372 auf. Die erste Außenwand 370 verbindet erste Enden der Türflügelwand 332 und der Dichtungswand 334. Die zweite Außenwand 372 verbindet zweite Enden der Türflügelwand 332 und der Dichtungswand 334. Der Montagesteg 336 ist längs zu der ersten Außenwand 370 und der zweiten Außenwand 372 angeordnet. Der Montagesteg 336 ist in einem mittleren Drittel eines Abstands zwischen der ersten Außenwand 370 und der zweiten Außenwand 372 angeordnet. Beispielsweise ist der Montagesteg 336 mittig zwischen der ersten Außenwand 370 und der zweiten Außenwand 372 angeordnet.

**Fig. 4** zeigt eine schematische Darstellung einer Vorrichtung 120 zum Einklemmschutz gemäß einem Ausführungsbeispiel. Die Vorrichtung 120 entspricht oder ähnelt der Vorrichtung aus Fig. 1 bzw. Fig. 3. Hierbei ist die Vorrichtung 120 in einer perspektivischen Ansicht dargestellt. In der Darstellung von Fig. 4 sind von der Vorrichtung 120 das Extrusionsprofil 330, von dem explizit der Anbringungsabschnitt 348 bezeichnet ist, und das Schaltelement 350 gezeigt. Ferner sind ein Abschlusswiderstand 455 und ein Stopfen 470 dargestellt.

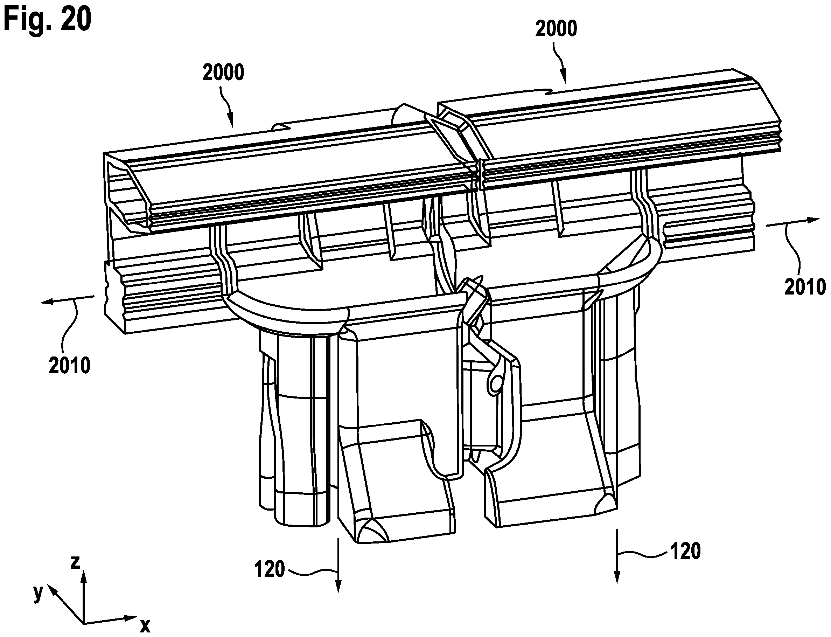

Der Abschlusswiderstand 455 ist an dem Schaltelement 350 angebracht. Der Abschlusswiderstand 455 kann eine Funktionsüberwachung des Schaltelements 350 bzw. der Vorrichtung 120 ermöglichen. Ein Leitungsbruch bei dem Schaltelement 350 bzw. einer integrierten elektrischen Schaltleiste kann mittels des Ruhestromprinzips erkannt werden. Hierzu kann der Abschlusswiderstand 455 verwendet werden. Nachfolgend kann die Vorrichtung 120, um beispielsweise um einen Eintritt von Feuchtigkeit zu vermeiden, an zumindest einem Ende derselben mittels des Stopfens 470 abgekapselt werden. Der Stopfen 470 kann beispielsweise eingeklebt oder angespritzt werden. Der Stopfen 470 kann auch ein angespritztes Formteil sein. Hierbei sei auch auf Fig. 20 verwiesen.

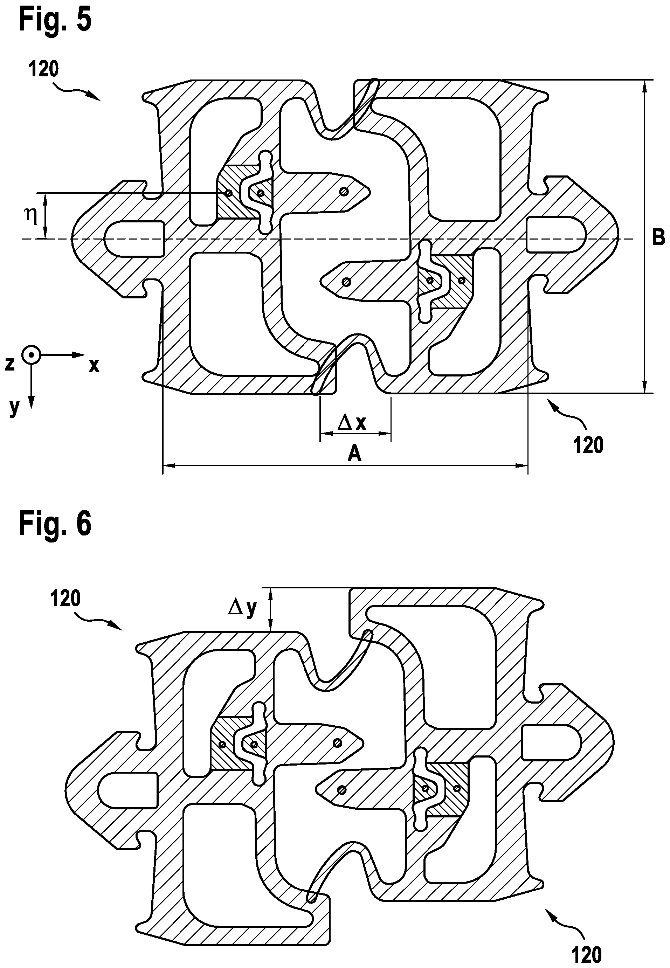

**Fig. 5** zeigt eine schematische Darstellung von Vorrichtungen 120 gemäß einem Ausführungsbeispiel. Gezeigt sind zwei Vorrichtungen 120, wobei jede Vorrichtung einer der vorstehend gezeigten und beschriebenen Vorrichtungen entspricht oder ähnelt. Die Vorrichtungen 120 sind wie in dem Türsystem aus Fig. 1 in einem geschlossenen Zustand der Tür aneinander angrenzend angeordnet. Hierbei ist eine komplementäre Anordnung der Vorrichtungen 120 relativ zueinander erkennbar. Dabei stehen das Dichtelement einer ersten Vorrichtung 120 und die Dichtfläche einer zweiten Vorrichtung 120 miteinander in Kontakt, wobei die Dichtfläche der ersten Vorrichtung 120 und das Dichtelement der zweiten Vorrichtung 120 miteinander in Kontakt stehen.

Ferner sind in Fig. 5 auch Abmessungen und Toleranzen für eine Stellung der Vorrichtungen 120 bezüglich einander in einem geschlossenen, verriegelten Zustand einer zweiflügeligen Einstiegstür dargestellt. Eine Nominal-Gummibreite A erstreckt sich von der Türflügelwand der ersten Vorrichtung 120 bis zu der Türflügelwand der zweiten Vorrichtung 120. Die Nominal-Gummibreite A beträgt beispielsweise 30 bis 100 Millimeter. Eine Fingerschutzgummi-Breite B bzw. Türflügel-Breite B repräsentiert eine Abmessung der Vorrichtungen 120 entlang der y-Achse in den Erstreckungsebenen der Türflügelwand bzw. der Dichtungswand. Die Fingerschutzgummi-Breite B beträgt beispielsweise 20 bis 50 Millimeter. Eine Pressungstoleranz Δx in x-Richtung repräsentiert eine erlaubte Stellung der beiden Vorrichtungen 120 zueinander. Dabei beträgt die Pressungstoleranz Δx beispielsweise weniger als 10 Millimeter. Das Schaltelement jeder Vorrichtung 120 ist um einen Versatzabstand n quer zu der x-Achse von dem Montagesteg versetzt angeordnet. Der Versatzabstand n beträgt beispielsweise maximal 10 Millimeter. Der Versatzabstand n kann auch einen Abstand des Schaltelements von einer neutralen Phase repräsentieren, damit das Schaltelement bzw. die Vorrichtung 120 für exemplarische Türflügelformen mit einem maximalen Biegeradius an einer Türflügelaußenseite von bis zu R200mm um die x-Achse eingesetzt werden kann, ohne dass Funktionseinschränkungen auftreten bzw. es zu einer ungewollten Detektion bzw. einem Auslösen des Schaltelements hervorgerufen durch eine Türflügelform kommt.

**Fig. 6** zeigt eine schematische Darstellung von Vorrichtungen 120 gemäß einem Ausführungsbeispiel. Hierbei entspricht die Darstellung in Fig. 6 der Darstellung aus Fig. 5 mit Ausnahme dessen, dass die Vorrichtungen 120 entlang der y-Achse aus Fig. 5 um einen seitlichen Versatz Δy relativ zueinander verschoben angeordnet sind. Eine Abmessung der Dichtfläche jeder Vorrichtung 120 entlang der y-Achse ist größer als der zulässige seitliche Versatz Δy, damit immer ausreichend Dichtfläche vorhanden ist. Der zulässige seitliche Versatz Δy beträgt beispielsweise weniger als 10 Millimeter, d. h. |Δy| < 10 mm. Insbesondere ist in Fig. 6 ein positiver seitlicher Versatz Δy gezeigt.

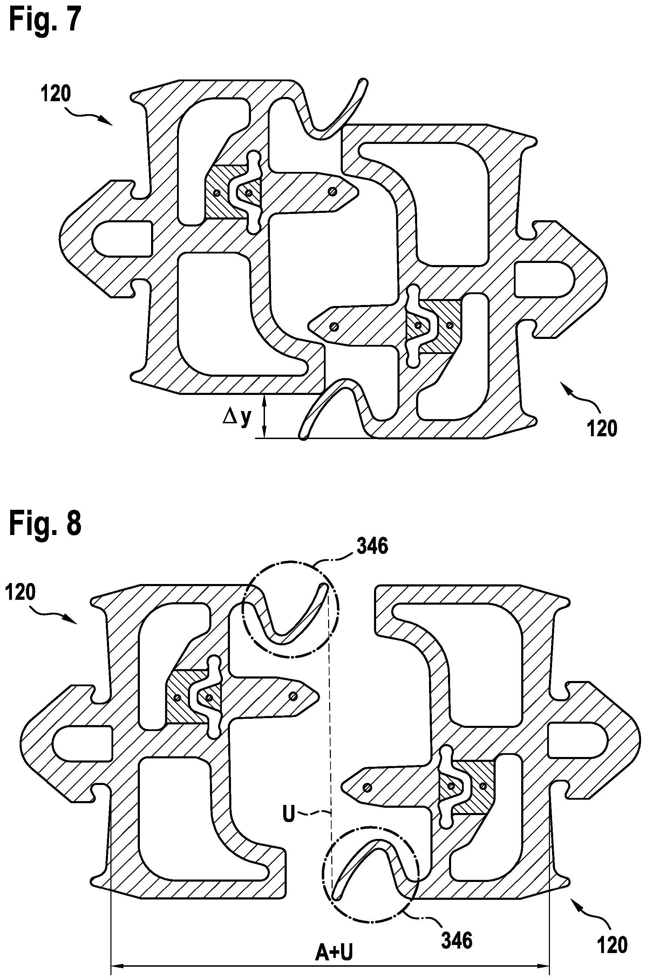

**Fig. 7** zeigt eine schematische Darstellung von Vorrichtungen 120 gemäß einem Ausführungsbeispiel. Dabei entspricht die Darstellung in Fig. 7 der Darstellung aus Fig. 6 mit Ausnahme dessen, dass ein negativer seitlicher Versatz Δy der Vorrichtungen 120 relativ zueinander dargestellt ist.

**Fig. 8** zeigt eine schematische Darstellung von Vorrichtungen 120 gemäß einem Ausführungsbeispiel. Die Darstellung in Fig. 8 entspricht hierbei der Darstellung aus Fig. 5 mit Ausnahme dessen, dass die Vorrichtungen 120 entlang der x-Achse bzw. Querachse weiter voneinander entfernt angeordnet sind. Hierbei sind Dichtelemente 346 der Vorrichtungen 120 explizit bezeichnet. Ferner ist eine Überlappung U eingezeichnet. Die Überlappung U repräsentiert einen Verlust einer lichten Durchgangsweite und ist minimiert. Beispielsweise beträgt die Überlappung U weniger als 20 Millimeter. Entsprechend sind die Nominal-Gummibreite A und die Überlappung U ebenfalls in der Darstellung von Fig. 8 in addierter Form dargestellt, d. h. A+U.

Eine maximale Schließkraft bzw. Tür-Schließkraft entspricht einem Zusammendrücken jedes Dichtelements 346. Diese maximale Schließkraft kann für einen zulässigen Anwendungsfall unter Einhaltung vorbestimmter Toleranzen beispielsweise weniger als 0,25 N/mm bzw. Newton pro Millimeter betragen.

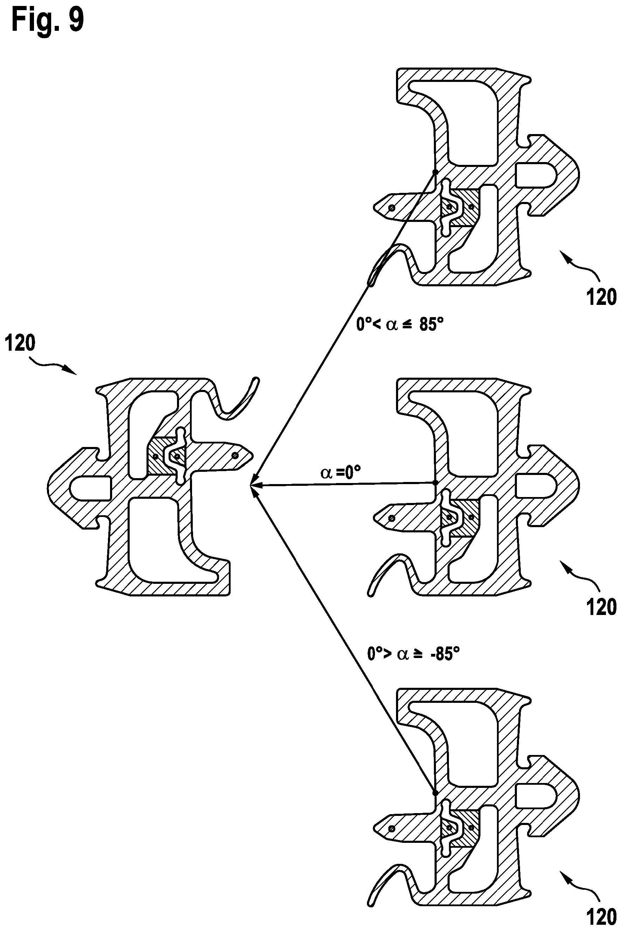

**Fig. 9** zeigt eine schematische Darstellung von Vorrichtungen 120 gemäß einem Ausführungsbeispiel. Die Darstellung von Fig. 9 entspricht den Darstellungen aus einer der Figuren 5 bis 8 mit Ausnahme dessen, dass links in Fig. 9 eine erste Vorrichtung 120 und rechts in Fig. 9 eine zweite Vorrichtung 120 an drei möglichen Positionen gezeigt sind, um Tür-Einschwenkbewegungen zu veranschaulichen. Bei zweiflügeligen synchronisierten Türen treffen die Türen und somit die Vorrichtungen 120 unter einem Einfahrwinkel α von null Grad bzw. α = 0° aufeinander. Bei einflügeligen Türen oder zweiflügeligen asynchronen Türen liegt der Einfahrwinkel α zwischen 0° < α ≤ 85° bzw. 0° > α ≥ -85°.

Hinsichtlich möglicher Belastungen der Vorrichtungen 120 sei angemerkt, dass eine Druck- bzw. Wasserdichtheit für eine Beständigkeit gegenüber Fehlauslösungen der Schaltelemente der Vorrichtungen 120 insbesondere bei aerodynamischen Druckbelastungen im Schienenfahrzeugbereich zwischen 0,5 und 10 kPa bzw. Kilopascal liegt.

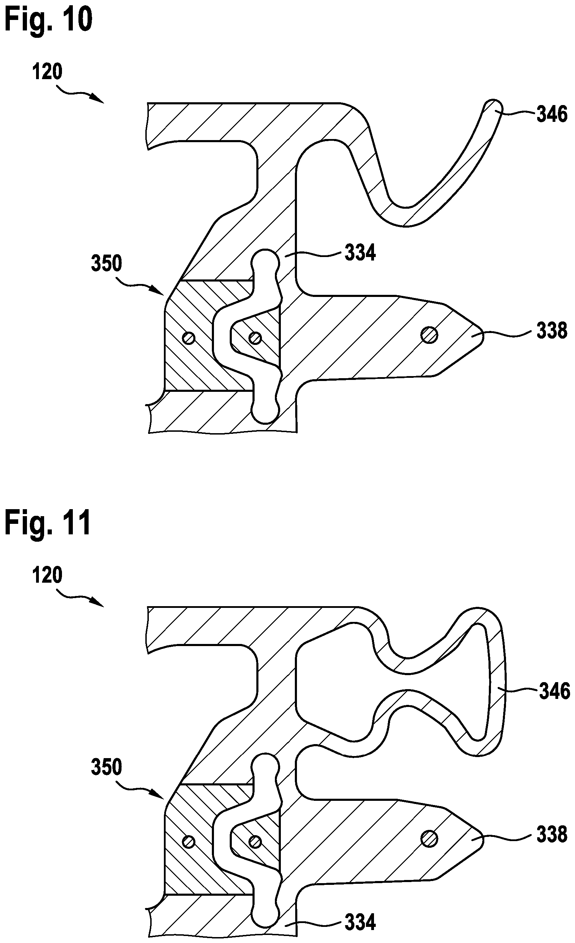

**Fig. 10** zeigt eine schematische Darstellung eines Teilabschnitts einer Vorrichtung 120 gemäß einem Ausführungsbeispiel. Die Vorrichtung 120 entspricht hierbei der Vorrichtung aus Fig. 3. Der in der Darstellung von Fig. 10 von der Vorrichtung 120 gezeigte Teilabschnitt umfasst im Wesentlichen die Dichtungswand 334, den Schaltstößel 338, das Dichtelement 346 und das Schaltelement 350. Hierbei ist das Dichtelement 346 als eine Dichtlippe ausgeformt.

**Fig. 11** zeigt eine schematische Darstellung eines Teilabschnitts einer Vorrichtung 120 gemäß einem Ausführungsbeispiel. Dabei entspricht die Darstellung in Fig. 11 der Darstellung aus Fig. 10 mit Ausnahme dessen, dass das Dichtelement 346 als ein Dichtballon ausgeformt ist.

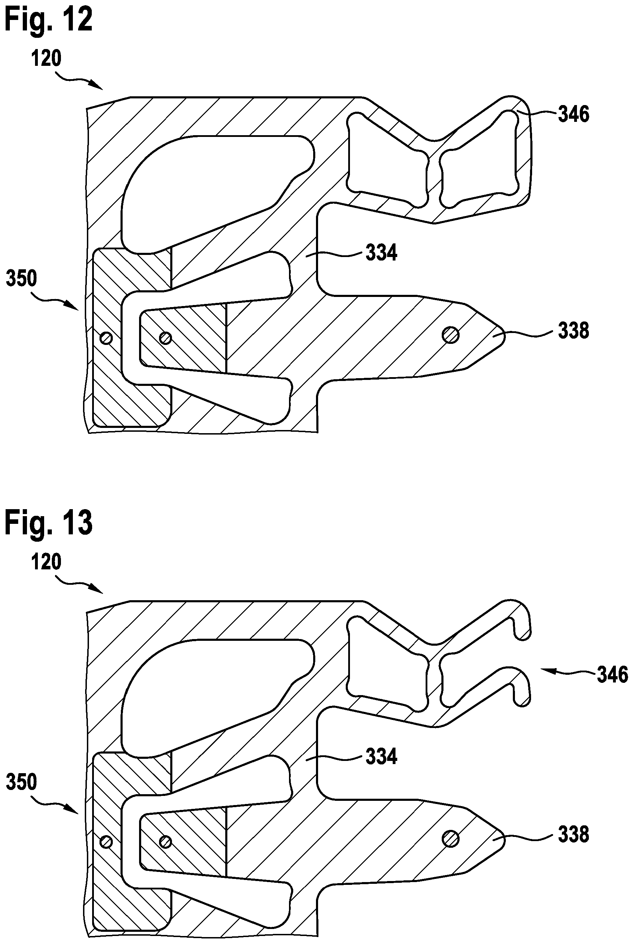

**Fig. 12** zeigt eine schematische Darstellung eines Teilabschnitts einer Vorrichtung 120 gemäß einem Ausführungsbeispiel. Dabei entspricht die Darstellung in Fig. 12 der Darstellung aus Fig. 10 bzw. Fig. 11 mit Ausnahme dessen, dass das Dichtelement 346 als ein Doppelballon ausgeformt ist.

**Fig. 13** zeigt eine schematische Darstellung eines Teilabschnitts einer Vorrichtung 120 gemäß einem Ausführungsbeispiel. Dabei entspricht die Darstellung in Fig. 13 der Darstellung aus Fig. 10, Fig. 11 bzw. Fig. 12 mit Ausnahme dessen, dass das Dichtelement 346 als ein Dichtballon mit Doppellippe ausgeformt ist.

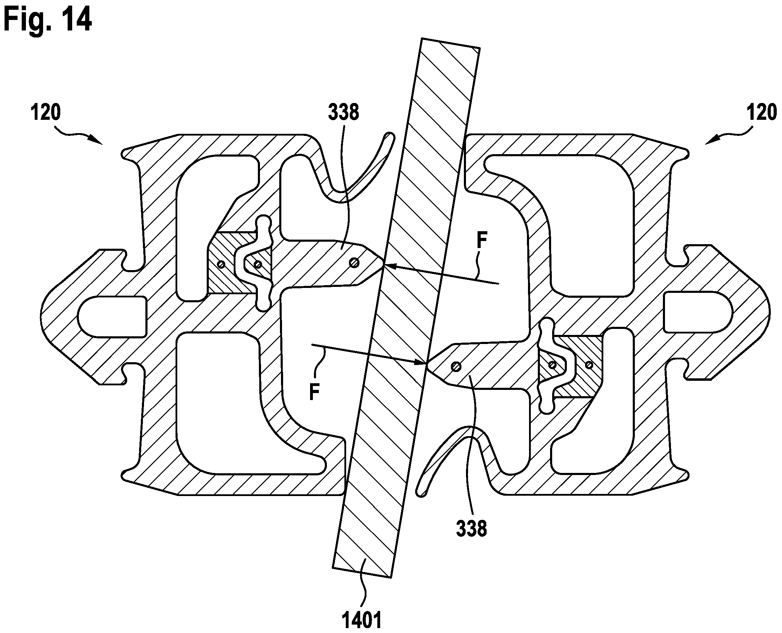

**Fig. 14** zeigt eine schematische Darstellung von Vorrichtungen 120 gemäß einem Ausführungsbeispiel. Die Vorrichtungen 120 entsprechen hierbei den Vorrichtungen aus einer der Figuren 5 bis 9, wobei zwischen den Vorrichtungen 120 in der Darstellung von Fig. 14 ein Prüfkörper 1410, genauer gesagt ein starrer Prüfkörper 1410 angeordnet ist. Der Prüfkörper 1410 ist hierbei zwischen den Vorrichtungen 120 eingeklemmt und steht in Kontakt mit den Schaltstößeln 338 der Vorrichtungen 120. Hierbei wirkt aufgrund des Vorhandenseins des Prüfkörpers 1410 zwischen den Vorrichtungen 120 auf jeden Schaltstößel 338 eine Kraft F bzw. Kompressionskraft F.

Somit ist in Fig. 14 anders ausgedrückt ein Einklemmschutz veranschaulicht. Bei starren Prüfkörpern 1401 wird der Schaltstößel 338 mit der Kraft F gedrückt. Starre Prüfkörper 1401, zum Beispiel mit Abmessungen von 10x50 mm, 30x60 mm oder dergleichen, werden unter Verwendung der Vorrichtungen 120 bereits vor Erreichen einer Tür-Geschlossenposition eines Türsystems erkannt.

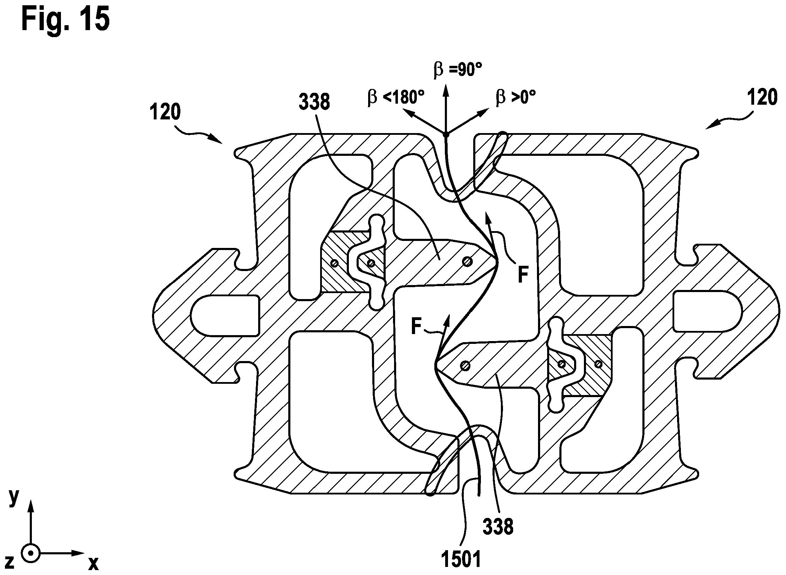

**Fig. 15** zeigt eine schematische Darstellung von Vorrichtungen 120 gemäß einem Ausführungsbeispiel. Die Darstellung in Fig. 15 entspricht hierbei der Darstellung aus Fig. 14 mit Ausnahme dessen, dass zwischen den Vorrichtungen 120 ein Prüftuch 1501 bzw. ein elastischer Prüfkörper 1501 eingeklemmt ist. Bei einem Anziehen des Prüftuchs 1501 wirkt auf jeden Schaltstößel 338 eine Kraft F bzw. Kompressionskraft F.

Somit ist in Fig. 15 anders ausgedrückt eine Einklemmerkennung veranschaulicht. Elastische Prüfkörper 1501, wie z.B. ein Stofftuch, werden in Tür-Geschlossenposition eines Türsystems durch Anziehen mit einer Kraft F von beispielsweise bis zu 150 Newton und unter einem Ziehwinkel β von 0°<β<180° detektiert. Beim Anziehen von elastischen Prüfkörpern 1501 wird der Schaltstößel 338 unter Einwirkung der Kraft F verdreht. Anders ausgedrückt bewirkt die Kraft F beim Anziehen von elastischen Prüfkörpern 1501 bei dem Schaltstößel 338 eine Bewegungskomponente entlang der y-Achse.

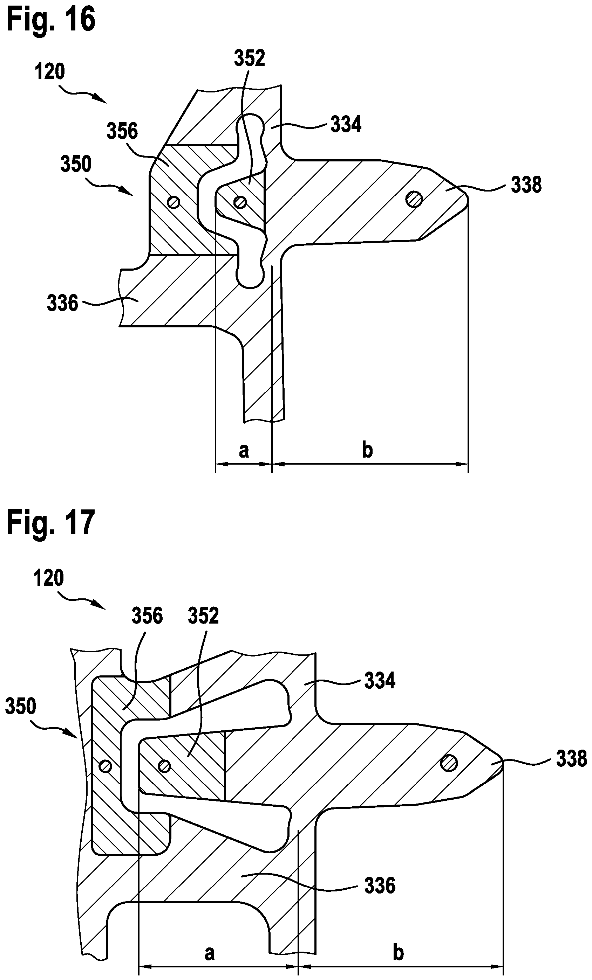

**Fig. 16** zeigt eine schematische Darstellung eines Teilabschnitts einer Vorrichtung 120 gemäß einem Ausführungsbeispiel. Die Vorrichtung 120 entspricht hierbei der Vorrichtung aus Fig. 3. Der in der Darstellung von Fig. 16 von der Vorrichtung 120 gezeigte Teilabschnitt umfasst im Wesentlichen die Dichtungswand 334, den Montagesteg 336, den Schaltstößel 338 und das Schaltelement 350 mit dem ersten elektrisch leitfähigen Abschnitt 352 sowie dem zweiten elektrisch leitfähigen Abschnitt 356.

Ferner sind in Fig. 16 eine erste Abmessung a und eine zweite Abmessung b eingezeichnet. Die erste Abmessung a repräsentiert eine Abmessung des ersten Abschnitts 352 des Schaltelements 350 entlang der Querachse der Vorrichtung 120. Alternativ repräsentiert die erste Abmessung a eine Abmessung des ersten Abschnitts 352 des Schaltelements 350 sowie des Schaltstößels 338 entlang der Querachse auf einer der Türflügelwand zugewandten Seite der Dichtungswand 334. Die zweite Abmessung b repräsentiert eine Abmessung des Schaltstößels 338 entlang der Querachse der Vorrichtung 120 auf einer von der Türflügelwand abgewandten Seite der Dichtungswand 334. Alternativ repräsentiert die zweite Abmessung b eine Abmessung des Schaltstößels 338 Ein Verhältnis der beiden Abmessungen a und b zueinander weist einen vordefinierten Wert auf.

Anders ausgedrückt ist in Fig. 16 ein Übersetzungsverhältnis des Schaltstößels 338 veranschaulicht. Dabei kann der Schaltstößel 338 und umliegende Abschnitte der Vorrichtung 120 sowie auch das Schaltelement 350 derart ausgeformt sein, dass ein Weg bzw. eine Verformung des Schaltstößels 338 und des Schaltelements 350 mit einem geeigneten Übersetzungsverhältnis ausgestattet ist, dass somit eine Empfindlichkeit des Schaltelements 350 gesteuert bzw. ein Ansprechverhalten der Einklemmerkennung eingestellt werden kann. Durch Änderung eines Übersetzungsverhältnisses bzw. des Verhältnisses zwischen den Abmessungen a/b kann je nach Anforderung bei konstantem Spalt zwischen den elektrisch leitfähigen Abschnitten 352 und 356 eine Empfindlichkeit des Schaltelements 350 eingestellt werden.

**Fig. 17** zeigt eine schematische Darstellung eines Teilabschnitts einer Vorrichtung 120 gemäß einem Ausführungsbeispiel. Die Darstellung in Fig. 17 entspricht hierbei der Darstellung aus Fig. 16 mit Ausnahme dessen, dass das Verhältnis zwischen den Abmessungen a und b unterschiedlich ist und sich der zweite elektrisch leitfähige Teilabschnitt 356 bis in den Montagesteg 336 erstreckt.

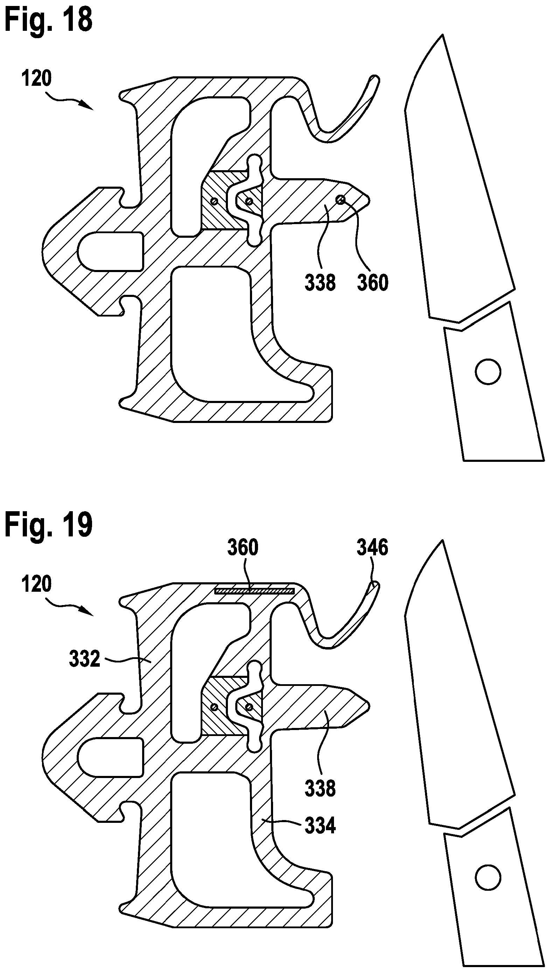

**Fig. 18** zeigt eine schematische Darstellung einer Vorrichtung 120 gemäß einem Ausführungsbeispiel. Die Vorrichtung 120 entspricht hierbei der Vorrichtung aus Fig. 3. von der Vorrichtung 120 sind in der Darstellung von Fig. 18 der Schaltstößel 338 und die Schnittschutzeinrichtung 360 explizit mit Bezugszeichen versehen. Die Schnittschutzeinrichtung 360 ist in dem Schaltstößel 338 integriert angeordnet. Dabei ist die Schnittschutzeinrichtung 360 als ein Metalldraht ausgeführt. Der Metalldraht kann beispielsweise aus Edelstahl ausgeformt und mit dem Extrusionsprofil extrudierbar und ablängbar sein.

**Fig. 19** zeigt eine schematische Darstellung einer Vorrichtung 120 gemäß einem Ausführungsbeispiel. Die Vorrichtung 120 in Fig. 19 entspricht der Vorrichtung aus Fig. 3 bzw. Fig. 18 mit Ausnahme dessen, dass die Schnittschutzeinrichtung 360 in einem zu der Dichtungswand 334 benachbarten Teilabschnitt des Extrusionsprofils der Vorrichtung 120 integriert ist. Hierbei ist die Schnittschutzeinrichtung 360 als ein Metallband, eine Metalleinlage oder dergleichen ausgeführt. Genauer gesagt ist die Schnittschutzeinrichtung 360 hierbei in einer Seitenwand zwischen der Dichtungswand 334 und der Türflügelwand 332 und benachbart zu dem Dichtelement 346 integriert.

Unter Bezugnahme insbesondere auf die Figuren 18 und 19 ist anzumerken, dass die Schnittschutzeinrichtung 360 als Vandalismusschutz bzw. zum Vandalismus-Sicherheit einsetzbar ist, z.B. für den Fall, dass mittels eines Messers versucht wird, die Vorrichtung 120 und insbesondere das Schaltelement zu beschädigen bzw. durchzuschneiden, so wobei dass eine Funktion der Einklemmerkennung mittels der Schnittschutzeinrichtung 360 beibehalten werden kann.

**Fig. 20** zeigt eine schematische Darstellung von Formteilen 2000 gemäß einem Ausführungsbeispiel. Die Formteile 2000 sind für das Türsystem aus Fig. 1 oder ein ähnliches Türsystem verwendbar. Dabei fungiert jedes Formteil 2000 als Übergang zwischen einem Dichtungsprofil 2010 bzw. einer Türdichtung 2010 eines Türflügels einer Tür zu einer Vorrichtung 120 bzw. einem Fingerschutzprofil 120. Die Vorrichtung 120 entspricht oder ähnelt hierbei der Vorrichtung aus einer der vorstehend beschriebenen Figuren.

In Fig. 20 sind zwei Formteile 2000 für zwei Türflügel einer Tür eines Fahrzeugs dargestellt. Ferner sind zwei Dichtungsprofile 2010 und zwei Vorrichtungen 120 angedeutet. Die Formteile 2000 können entweder geklebt oder an die Profile angespritzt werden. Die Formteile 2000 können bei einem Türflügel oben und unten verwendet werden.

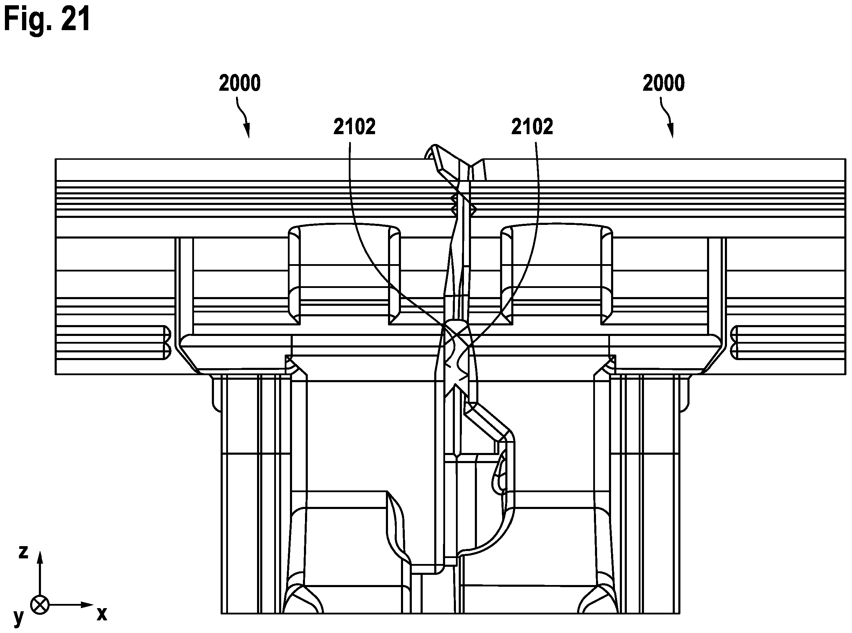

**Fig. 21** zeigt eine schematische Darstellung von Formteilen 2000 gemäß einem Ausführungsbeispiel. Die Formteile 2000 entsprechend den Formteilen aus Fig. 20. In Fig. 21 sind ferner Anschlagflächen 2102 der Formteile 2000 dargestellt. Mittels der Anschlagflächen 2102 kann verhindert werden, dass bei einem Schließvorgang einer Tür die Formteile 2000 in x-Richtung weiter als zulässig gepresst werden. Die Anschlagflächen 2102 können in den Formteilen 2000 in einem im Türsystem montierten Zustand derselben oben und/oder unten angeordnet sein.

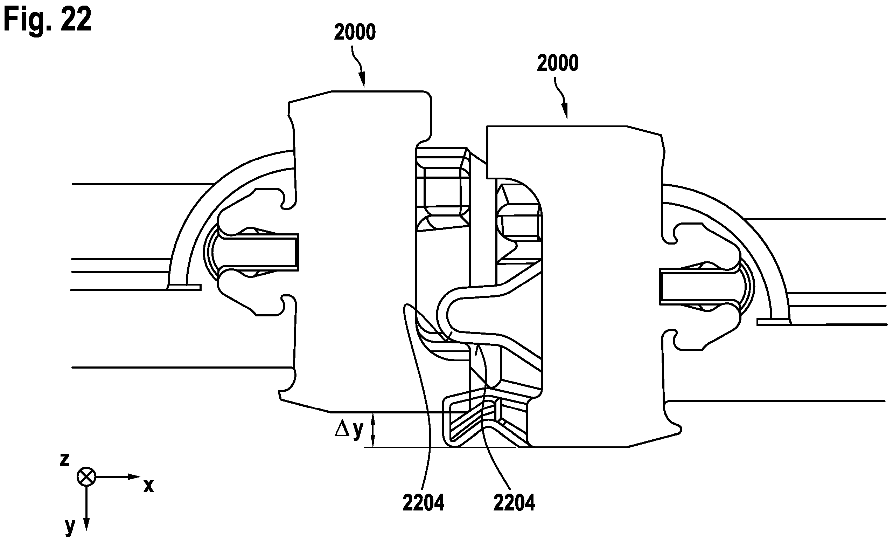

**Fig. 22** zeigt eine schematische Darstellung von Formteilen 2000 gemäß einem Ausführungsbeispiel. Die Formteile 2000 entsprechend den Formteilen aus Fig. 20 bzw. Fig. 21. In Fig. 22 sind ferner Keilflächen 2204 bzw. Auflaufkeile 2204 der Formteile 2000 dargestellt. Hierbei sind die Formteile 2000 entlang der y-Achse relativ zueinander versetzt. Die Keilflächen 2204 bzw. Auflaufkeile 2204 sind ausgeformt, um einen y-Versatz Δy bzw. Versatz entlang der y-Achse zu reduzieren.

Anders ausgedrückt ist zur Verringerung eines seitlichen Versatzes bzw. des y-Versatzes Δy in jedem Formteil 2000 ein Auflaufkeil 2204 integriert, um einen Formschluss zwischen den Formteilen 2000 herzustellen eines. Zur Reduzierung des Gummiabriebes kann auf jeder Keilfläche 2204 eine Metalleinlage angeordnet sein. Die Auflaufkeile 2204 können in den Formteilen 2000 oben und/oder unten angeordnet sein.

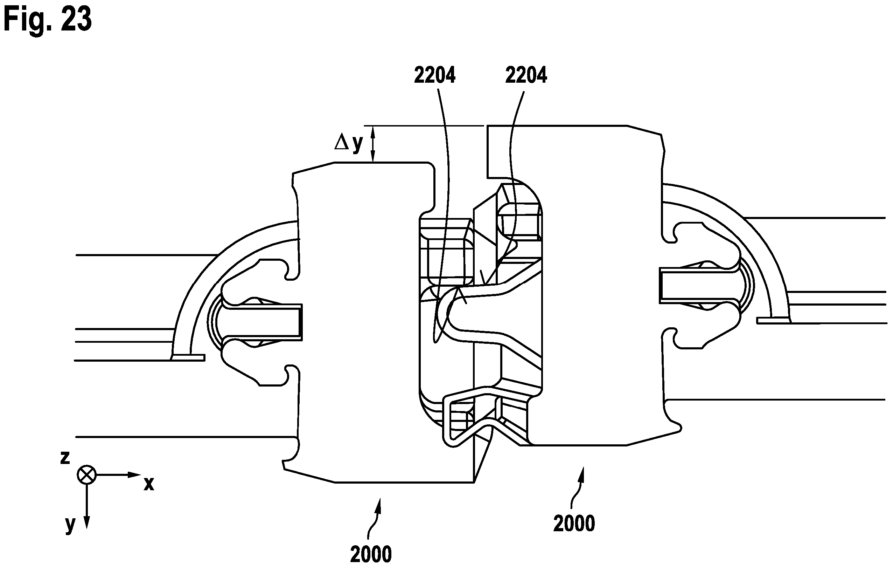

**Fig. 23** zeigt eine schematische Darstellung von Formteilen 2000 gemäß einem Ausführungsbeispiel. Die Darstellung in Fig. 23 entspricht hierbei der Darstellung aus Fig. 22 mit Ausnahme dessen, dass die Formteile 2000 entlang der y-Achse in entgegengesetzter Richtung relativ zueinander versetzt sind.

Unter Bezugnahme auf die Figuren 20 bis 23 sei auch angemerkt, dass die Formteile 2000 eine Drainage aufweisen können, damit bei einem möglichen Wassereintritt in die Formteile 2000 eingedrungenes Wasser wieder nach außen abgeleitet werden kann.

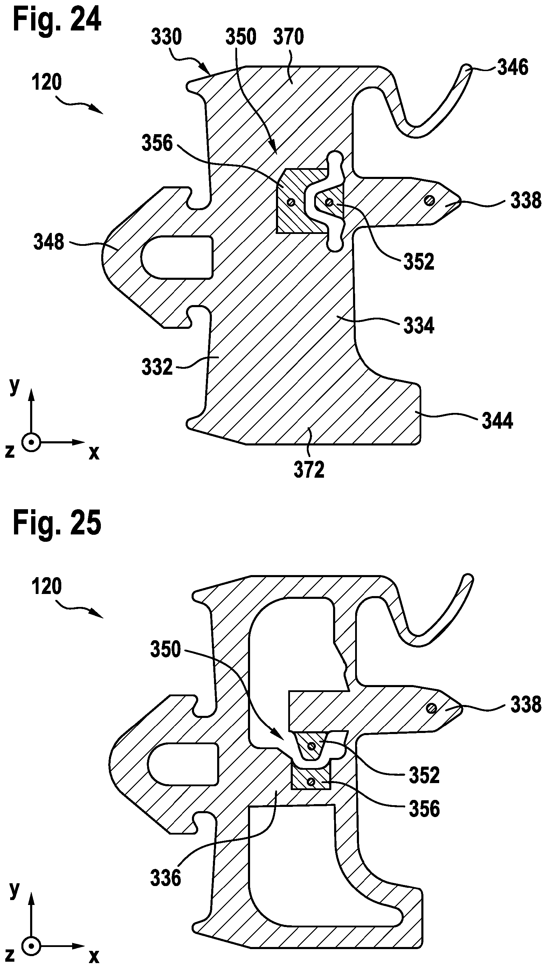

**Fig. 24** zeigt eine schematische Darstellung einer Vorrichtung 120 gemäß einem Ausführungsbeispiel. Dabei entspricht die Vorrichtung 120 der Vorrichtung aus einer der Figuren 3, 5 bis 10 und 14 bis 19 mit Ausnahme dessen, dass die Vorrichtung 120 in Fig. 24 ein Extrusionsprofil 330 aufweist, das als ein Vollprofil ausgeformt ist. Somit entfallen ein Montagesteg sowie eine Zwischenwand.

Das Extrusionsprofil 330 ist zwischen der Türflügelwand 332 und der Dichtungswand 334 sowie zwischen der ersten Seitenwand 370 und der zweiten Seitenwand 372 mit dem Elastomermaterial ausgefüllt, mit Ausnahme des Zwischenraums zwischen dem ersten elektrisch leitfähigen Abschnitt 352 und dem zweiten elektrisch leitfähigen Abschnitt 356 des Schaltelements. Auch hierbei kann eine Kraftübertragung bei der Montage an dem Schaltelement vorbei geleitet werden.

**Fig. 25** zeigt eine schematische Darstellung einer Vorrichtung 120 gemäß einem Ausführungsbeispiel. Dabei entspricht die Vorrichtung 120 der Vorrichtung aus einer der Figuren 3, 5 bis 10 und 14 bis 19 mit Ausnahme dessen, dass die Vorrichtung 120 in Fig. 25 ein Schaltelement 350 aufweist, bei dem sich der durch die Kompressionskraft komprimierbare Zwischenraum zwischen dem ersten Abschnitt 352 und dem zweiten Abschnitt 356 entlang der Querachse x erstreckt. Hierbei entfällt eine Zwischenwand.

Dabei ist der erste Abschnitt 352 des Schaltelements 350 an dem Schaltstößel 338 angeordnet. Der zweite Abschnitt 356 ist an dem Montagesteg 336 angeordnet. Hierbei ist der erste Abschnitt 352 bezogen auf eine relativ zu der Querachse x quer verlaufende Achse y zwischen dem zweiten Abschnitt 356 und dem Schaltstößel 338 angeordnet. Auch sind der erste Abschnitt 352 und der zweite Abschnitt 356 des Schaltelements 350 bezogen auf die relativ zu der Querachse x quer verlaufende Achse y zwischen dem Montagesteg 336 und dem Schaltstößel 338 angeordnet.

Somit ist das Schaltelement 350 ansprechend auf eine Kompressionskraft bei einer Bewegung des Schaltstößels 338 entlang der relativ zu der Querachse x quer verlaufenden Achse y auslösbar.

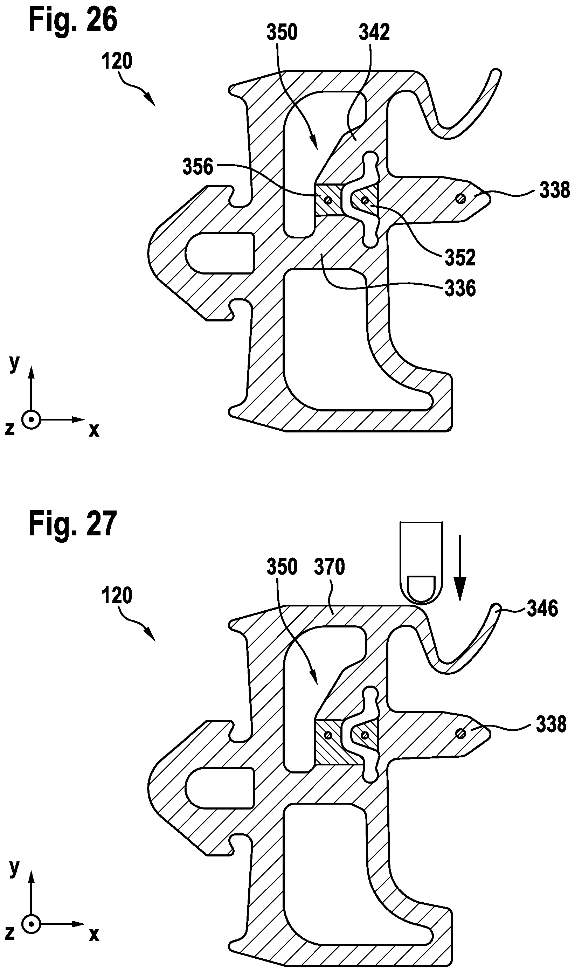

**Fig. 26** zeigt eine schematische Darstellung einer Vorrichtung 120 gemäß einem Ausführungsbeispiel. Dabei entspricht die Vorrichtung 120 der Vorrichtung aus einer der Figuren 3, 5 bis 10 und 14 bis 19 mit Ausnahme dessen, dass bei der Vorrichtung 120 in Fig. 26 der zweite elektrisch leitfähige Abschnitt 356 des Schaltelements in einem unterschiedlichen Teilabschnitt der Zwischenwand 342 ausgeformt bzw. angeordnet ist.

Genauer gesagt ist der zweite Abschnitt 356 in einem kleineren Teilabschnitt der Zwischenwand 342 als bei den Vorrichtungen aus den vorstehend genannten Figuren angeordnet. Gemäß einem anderen Ausführungsbeispiel können die Abschnitte 352 und 356 des Schaltelements je nach Anforderung ausgeformt sein. Gemäß einem Ausführungsbeispiel ist das Schaltelement ausgebildet, um lediglich dann zu schalten bzw. ausgelöst zu werden, wenn eine Kompressionskraft entlang der Querachse x auf den Schaltstößel 338 wirkt.

**Fig. 27** zeigt eine schematische Darstellung einer Vorrichtung 120 gemäß einem Ausführungsbeispiel. Dabei entspricht die Vorrichtung 120 der Vorrichtung aus einer der Figuren 3, 5 bis 10 und 14 bis 19. Ferner ist in Fig. 27 veranschaulicht, dass jemand im Begriff ist, mit einem Finger, beispielsweise im Rahmen von Vandalismus, entlang einer relativ zu der Querachse x quer verlaufenden Achse y auf die Vorrichtung 120 zu drücken. Der Finger ist hierbei benachbart zu der ersten Seitenwand 370 und dem Dichtelement 346 angeordnet. Hierbei würde der Schaltstößel 338 lediglich verdreht.

Eine Detektion eines solchen Vandalismusfalles durch das Schaltelement 350 ist hierbei nicht vorgesehen. Die Vorrichtung 120 bietet jedoch Vandalismusschutz gegen Draufdrücken eines Objektes auf die Vorrichtung 120 entlang der relativ zu der Querachse x quer verlaufenden Achse y.

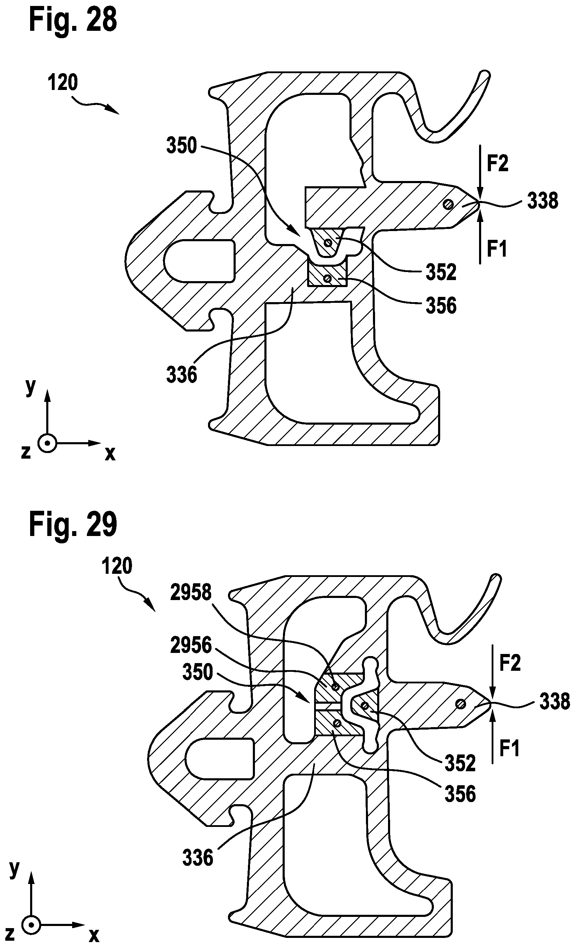

**Fig. 28** zeigt eine schematische Darstellung einer Vorrichtung 120 gemäß einem Ausführungsbeispiel. Dabei entspricht die Vorrichtung 120 der Vorrichtung aus Fig. 25, wobei in der Darstellung zwei Richtungspfeile für eine auf den Schaltstößel 338 wirkende Kraft F1 in eine erste Richtung entlang der relativ zu der Querachse x quer verlaufenden Achse y und eine auf den Schaltstößel 338 wirkende Kraft F2 in eine zweite Richtung entlang der relativ zu der Querachse x quer verlaufenden Achse y ergänzt sind.

Gemäß dem hier dargestellten Ausführungsbeispiel ist das Schaltelement 350 ausgebildet, um dann zu schalten bzw. ausgelöst zu werden, wenn die Kraft F1 in die erste Richtung entlang der relativ zu der Querachse x quer verlaufenden Achse y auf den Schaltstößel 338 wirkt. Dabei kommen der erste elektrisch leitfähige Abschnitt 352 und der zweite elektrisch leitfähige Abschnitt 356 des Schaltelements 350 in Kontakt miteinander. Genauer gesagt ist das Schaltelement 350 hierbei ausgebildet, um nur dann zu schalten, wenn die Kraft F1 in die erste Richtung entlang der relativ zu der Querachse x quer verlaufenden Achse y auf den Schaltstößel 338 wirkt. Die Kraft F2 in die zweite Richtung entlang der relativ zu der Querachse x quer verlaufenden Achse y bewirkt, dass der erste Abschnitt 352 und der zweite Abschnitt 356 des Schaltelements 350 sich voneinander weg bewegen.

**Fig. 29** zeigt eine schematische Darstellung einer Vorrichtung 120 gemäß einem Ausführungsbeispiel. Dabei ähnelt die Vorrichtung 120 der Vorrichtung aus einer der vorstehend beschriebenen Figuren mit Ausnahme dessen, dass das Schaltelement 350 zusätzlich zu dem ersten elektrisch leitfähigen Abschnitt 352 und dem zweiten elektrisch leitfähigen Abschnitt 356 auch einen weiteren elektrisch leitfähigen Abschnitt 2956 mit einem weiteren elektrischen Leiter 2958 aufweist. Ferner sind zwei Richtungspfeile für eine auf den Schaltstößel 338 wirkende Kraft F1 in eine erste Richtung entlang der relativ zu der Querachse x quer verlaufenden Achse y und eine auf den Schaltstößel 338 wirkende Kraft F2 in eine zweite Richtung entlang der relativ zu der Querachse x quer verlaufenden Achse y dargestellt.

Der weitere Abschnitt 2956 ist benachbart zu dem zweiten Abschnitt 356 angeordnet. Dabei ist der weitere Abschnitt 2956 elektrisch von dem zweiten Abschnitt 356 getrennt bzw. isoliert. Genauer gesagt sind der weitere Abschnitt 2956 und der zweite Abschnitt 356 entlang der relativ zu der Querachse x quer verlaufenden Achse y voneinander beabstandet angeordnet. Der erste Abschnitt 352 und der zweite Abschnitt 356 sind von einem durch die Kraft F1 in die erste Richtung komprimierbaren Zwischenraum voneinander getrennt. Der erste Abschnitt 352 und der weitere Abschnitt 2956 sind von einem durch die Kraft F2 in die zweite Richtung komprimierbaren Zwischenraum voneinander getrennt.

Wenn die Kraft F1 in die erste Richtung entlang der relativ zu der Querachse x quer verlaufenden Achse y auf den Schaltstößel 338 wirkt, kommen der erste Abschnitt 352 und der zweite Abschnitt 356 des Schaltelements 350 in Kontakt miteinander. Wenn die Kraft F2 in die zweite Richtung entlang der relativ zu der Querachse x quer verlaufenden Achse y auf den Schaltstößel 338 wirkt, kommen der erste Abschnitt 352 und der weitere Abschnitt 2956 des Schaltelements 350 in Kontakt miteinander. Dadurch kann bei entsprechender Verkabelung und Auswertung eine Information diesbezüglich erhalten werden, ob bei Einklemmung eines Objektes in einem Türspalt beim Herausziehen eine Kraft von außen oder von innen bezüglich des Fahrzeugs bzw. eine Kraft F1 in die erste Richtung oder eine Kraft F2 in die zweite Richtung wirkt.

### BEZUGSZEICHENLISTE

- 100: Fahrzeug
- 110: Türsystem
- 112: Tür
- 114: Türflügel
- 120: Vorrichtung zum Einklemmschutz

- 200: Verfahren zum Herstellen
- 210: Schritt des Extrudierens
- 220: Schritt des Integrierens
- 230: Schritt des Ablängens

- 330: Extrusionsprofil
- 332: Türflügelwand
- 334: Dichtungswand
- 336: Montagesteg
- 338: Schaltstößel
- 342: Zwischenwand
- 344: Dichtfläche
- 346: Dichtelement
- 348: Anbringungsabschnitt
- 350: Schaltelement
- 352: erster elektrisch leitfähiger Abschnitt
- 354: erster elektrischer Leiter
- 356: zweiter elektrisch leitfähiger Abschnitt
- 358: zweiter elektrischer Leiter
- 360: Schnittschutzeinrichtung
- 370: erste Außenwand
- 372: zweite Außenwand

- 455: Abschlusswiderstand
- 470: Stopfen
- A: Nominal-Gummibreite
- B: Fingerschutzgummi-Breite bzw. Türflügel-Breite
- n: Versatzabstand
- Δx: Pressungstoleranz

- Δy: seitlicher Versatz

- U: Überlappung

- α: Einfahrwinkel

- F: Kompressionskraft bzw. auf Schaltstößel wirkende Kraft
- 1401: Prüfkörper

- β: Ziehwinkel
- 1501: Prüftuch

- a: erste Abmessung
- b: zweite Abmessung

- 2000: Formteil
- 2010: Dichtungsprofil

- 2102: Anschlagfläche

- 2204: Auflaufkeil bzw. Keilfläche

- F1: Kraft in erste Richtung
- F2: Kraft in zweite Richtung

- 2956: weiterer elektrisch leitfähiger Abschnitt
- 2958: weiterer elektrischer Leiter

## Patentansprüche

1. Vorrichtung (120) zum Einklemmschutz für eine Tür (112) für ein Fahrzeug (100), wobei die Vorrichtung (120) folgende Merkmale aufweist:
ein Extrusionsprofil (330), wobei das Extrusionsprofil (330) aus einem Elastomermaterial extrudiert ist, wobei das Extrusionsprofil (330) eine Türflügelwand (332), die in einem an der Tür (112) montierten Zustand der Vorrichtung (120) einer Stoßkante eines Türflügels (114) der Tür (112) zugewandt ist, eine bezüglich der Türflügelwand (332) gegenüberliegend angeordnete Dichtungswand (334) und einen Schaltstößel (338) zum Übertragen einer Kompressionskraft (F) in das Extrusionsprofil (330) aufweist, wobei der Schaltstößel (338) an der Dichtungswand (334) angeordnet ist und sich entlang einer Querachse (x) des Extrusionsprofils (330) von der Türflügelwand (332) weg erstreckt, wobei der Schaltstößel (338) ausgebildet ist, um bei Kontakt mit einem eingeklemmten Objekt in eine Bewegung mit zumindest einer Bewegungskomponente entlang der Querachse (x) und/oder mit zumindest einer Bewegungskomponente quer zu der Querachse (x) versetzt zu werden;
zumindest ein Schaltelement (350) zum Erfassen einer Kompression des Extrusionsprofils (330), wobei das zumindest eine Schaltelement (350) im Bereich des Schaltstößels (338) zwischen der Türflügelwand (332) und dem Schaltstößel (338) angeordnet ist, wobei das Schaltelement (350) einen ersten elektrisch leitfähigen Abschnitt (352) und einen zweiten elektrisch leitfähigen Abschnitt (356) aufweist, die von einem durch die Kompressionskraft (F) komprimierbaren Zwischenraum voneinander getrennt sind, wobei das zumindest eine Schaltelement (350) in das Extrusionsprofil (330) integriert ist und mit dem Extrusionsprofil (330) extrudierbar und ablängbar ist; **dadurch gekennzeichnet, dass** zumindest ein Versteifungselement (360) vorgesehen ist, wobei das Versteifungselement (360) in das
Extrusionsprofil (330) integriert ist, wobei das Versteifungselement (360) in dem Schaltstößel (338) und/oder in einem zu der Dichtungswand (334) benachbarten Teilabschnitt des Extrusionsprofils (330) integriert ist, wobei das Versteifungselement (360) als ein Metalldraht, Metallband oder dergleichen ausgeführt ist, wobei das Versteifungselement (360) als eine Schnittschutzeinrichtung, als eine Vandalismusschutzeinrichtung oder dergleichen fungiert.

2. Vorrichtung (120) gemäß Anspruch 1, mit einem Montagesteg (336), wobei der Montagesteg (336) sich entlang der Querachse (x) des Extrusionsprofils (330) erstreckt, wobei die Türflügelwand (332) und die Dichtungswand (334) über den Montagesteg (336) miteinander verbunden sind, und wobei der Montagesteg (336) entlang einer Erstreckungsebene der Dichtungswand (334) relativ zu dem Schaltstößel (338) versetzt angeordnet ist.

3. Vorrichtung (120) gemäß einem der vorangegangenen Ansprüche, bei der der erste Abschnitt (352) im Bereich des Schaltstößels (338) der Türflügelwand (332) zugewandt an der Dichtungswand (334) angeordnet ist und der zweite Abschnitt (356) bezogen auf die Querachse (x) zwischen dem ersten Abschnitt (352) und der Türflügelwand (332) angeordnet ist, oder wobei sich der durch die Kompressionskraft (F) komprimierbare Zwischenraum entlang der Querachse (x) erstreckt.

4. Vorrichtung (120) gemäß einem der vorangegangenen Ansprüche, bei der der zweite Abschnitt (356) des Schaltelements (350) an einer Zwischenwand (342) oder als ein Teilabschnitt einer Zwischenwand (342) zwischen der Dichtungswand (334) und der Türflügelwand (332) angeordnet ist.

5. Vorrichtung (120) gemäß einem der vorangegangenen Ansprüche, bei der ein Verhältnis einer Abmessung (b) des Schaltstößels (338) entlang der Querachse (x) zu einer Abmessung (a) des ersten Abschnitts (352) des Schaltelements (350) entlang der Querachse (x) einen vordefinierten Wert aufweist.

6. Vorrichtung (120) gemäß einem der vorangegangenen Ansprüche, bei der das Extrusionsprofil (330) eine Dichtfläche (344) und ein Dichtelement (346) aufweist, wobei die Dichtfläche (344) und das Dichtelement (346) mit der Dichtungswand (334) verbunden sind und sich von der Türflügelwand (332) weg erstrecken, wobei der Schaltstößel (338) zwischen der Dichtfläche (344) und dem Dichtelement (346) angeordnet ist.

7. Vorrichtung (120) gemäß Anspruch 6, bei der die Dichtfläche (344) eine Erstreckungsebene aufweist, die parallel zu der Erstreckungsebene der Dichtungswand (334) ist, wobei eine Abmessung der Dichtfläche (344) quer zu der Querachse (x) größer ist als ein vordefinierter, quer zu der Querachse (x) zulässiger Versatz (Δy) der Tür (112) bezogen auf ein Referenzobjekt.

8. Vorrichtung (120) gemäß einem der Ansprüche 6 bis 7, bei der das Dichtelement (346) als eine Dichtlippe, ein Dichtballon, ein Doppelballon und/oder eine Doppellippe ausgeformt ist.

9. Vorrichtung (120) gemäß einem der vorangegangenen Ansprüche, bei der das Extrusionsprofil (330) einen Anbringungsabschnitt (348) zum Anbringen der Vorrichtung (120) an der Tür (112) aufweist, wobei der Anbringungsabschnitt (348) mit der Türflügelwand (332) verbunden ist und sich entlang der Querachse (x) in Richtung von der Dichtungswand (334) weg erstreckt.

10. Türsystem (110) für ein Fahrzeug (100), wobei das Türsystem (110) folgende Merkmale aufweist:
eine Tür (112) mit zumindest einem Türflügel (114), **dadurch gekennzeichnet, dass** an einer Stoßkante zumindest eines Türflügels (114) eine Vorrichtung (120) gemäß einem der vorangegangenen Ansprüche angeordnet ist.

11. Türsystem (110) gemäß Anspruch 10, mit zumindest einem Formteil (2000), wobei das Formteil (2000) als ein Übergang zwischen einer Türdichtung (2010) eines Türflügels (114) der Tür (112) zu der Vorrichtung (120) fungiert.

12. Verfahren (200) zum Herstellen einer Vorrichtung (120) zum Einklemmschutz für eine Tür (112) für ein Fahrzeug (100), wobei das Verfahren (200) folgende Schritte aufweist:
Extrudieren (210) von Elastomermaterial zu einem Extrusionsprofil (330), wobei das Extrusionsprofil (330) eine Türflügelwand (332), die in einem an der Tür (112) montierten Zustand der Vorrichtung (120) einer Stoßkante eines Türflügels (114) der Tür (112) zugewandt ist, eine bezüglich der Türflügelwand (332) gegenüberliegend angeordnete Dichtungswand (334) und einen Schaltstößel (338) zum Übertragen einer Kompressionskraft (F) in das Extrusionsprofil (330) aufweist, wobei der Schaltstößel (338) an der Dichtungswand (334) angeordnet ist und sich entlang einer Querachse (x) des Extrusionsprofils (330) von der Türflügelwand (332) weg erstreckt, wobei der Schaltstößel (338) ausgebildet ist, um bei Kontakt mit einem eingeklemmten Objekt in eine Bewegung mit zumindest einer Bewegungskomponente entlang der Querachse (x) und/oder mit zumindest einer Bewegungskomponente quer zu der Querachse (x) versetzt zu werden;
Integrieren (220) zumindest eines Versteifungselements (360) und zumindest eines Schaltelements (350) zum Erfassen einer Kompression des Extrusionsprofils (330) in das Extrusionsprofil (330), wobei das zumindest eine Schaltelement (350) im Bereich des Schaltstößels (338) zwischen der Türflügelwand (332) und dem Schaltstößel (338) angeordnet wird, wobei das Schaltelement (350) einen ersten elektrisch leitfähigen Abschnitt (352) und einen zweiten elektrisch leitfähigen Abschnitt (356) aufweist, die von einem durch die Kompressionskraft (F) komprimierbaren Zwischenraum voneinander getrennt sind, wobei das Versteifungselement (360) in dem Schaltstößel (338) und/oder in einem zu der Dichtungswand (334) benachbarten Teilabschnitt des Extrusionsprofils (330) integriert wird, wobei das Versteifungselement (360) als ein Metalldraht, Metallband oder dergleichen ausgeführt ist, wobei das Versteifungselement (360) als eine Schnittschutzeinrichtung, als eine Vandalismusschutzeinrichtung oder dergleichen fungiert; und
Ablängen (230) des Extrusionsprofils (330) auf eine gewünschte Länge, wobei das Schaltelement (350) mit dem Extrusionsprofil (330) auf die Länge abgelängt wird.

13. Verfahren (200) gemäß Anspruch 12, bei dem der Schritt (210) des Extrudierens und der Schritt (220) des Integrierens gemeinsam ausgeführt werden, wobei das Schaltelement (350) mit dem Elastomermaterial extrudiert wird, und/oder bei dem im Schritt (220) des Integrierens das Schaltelement (350) und/oder ein weiteres Schaltelement auf das Elastomermaterial aufgedampft wird.

## Claims

1. Device (120) for protection against entrapment for a door (112) for a vehicle (100), wherein the device (120) comprises the following features:
an extrusion profile (330), wherein the extrusion profile (330) is extruded from an elastomer material, wherein the extrusion profile (330) comprises a door leaf wall (332) which, with the device (120) in a state mounted on the door (112), faces an impact edge of a door leaf (114) of the door (112), a sealing wall (334) which is arranged opposite with reference to the door leaf wall (332) and an actuating plunger (338) for transmitting a compression force (F) into the extrusion profile (330), wherein the actuating plunger (338) is arranged on the sealing wall (334) and extends away from the door leaf wall (332) along a transverse axis (x) of the extrusion profile (330), wherein the actuating plunger (338) is designed to be set into a movement with at least one movement component along the transverse axis (x) and/or with at least one movement component transverse to the transverse axis (x) upon contact with an entrapped object;
at least one switching element (350) for detecting a compression of the extrusion profile (330), wherein the at least one switching element (350) is arranged between the door leaf wall (332) and the actuating plunger (338) in the region of the actuating plunger (338), wherein the switching element (350) has a first electrically conductive portion (352) and a second electrically conductive portion (356) which are separated from one another by an intermediate space which is compressible by the compression force (F), wherein the at least one switching element (350) is integrated into the extrusion profile (330) and can be extruded and cut to length with the extrusion profile (330); **characterised in that** at least one reinforcement element (360) is provided,
wherein the reinforcement element (360) is integrated into the extrusion profile (330), wherein the reinforcement element (360) is integrated in the actuating plunger (338) and/or in a part portion of the extrusion profile (330) adjacent to the sealing wall (334), wherein the reinforcement element (360) is designed as a metal wire, metal band or the like, wherein the reinforcement element (360) functions as a cut protection device, as a vandalism protection device or the like.

2. Device (120) as claimed in claim 1, having a mounting web (336), wherein the mounting web (336) extends along the transverse axis (x) of the extrusion profile (330), wherein the door leaf wall (332) and the sealing wall (334) are connected together via the mounting web (336), and wherein the mounting web (336) is arranged offset with respect to the actuating plunger (338) along an extension plane of the sealing wall (334).

3. Device (120) as claimed in one of the preceding claims, where the first portion (352) is arranged on the sealing wall (334) facing the door leaf wall (332) in the region of the switching plunger (338) and the second portion (356) is arranged between the first portion (352) and the door leaf wall (332) with reference to the transverse axis (x), or wherein the intermediate space which is compressible by the compression force (F) extends along the transverse axis (x).

4. Device (120) as claimed in one the preceding claims, where the second portion (356) of the switching element (350) is arranged on a partition wall (342) or as a part portion of a partition wall (342) between the sealing wall (334) and the door leaf wall (332).

5. Device (120) as claimed in one of the preceding claims, where a ratio of a dimension (b) of the actuating plunger (338) along the transverse axis (x) to a dimension (a) of the first portion (352) of the switching element (350) along the transverse axis (x) comprises a predefined value.

6. Device (120) as claimed in one of the preceding claims, where the extrusion profile (330) comprises a sealing surface (344) and a sealing element (346), wherein the sealing surface (344) and the sealing element (346) are connected to the sealing wall (334) and extend away from the door leaf wall (332), wherein the actuating plunger (338) is arranged between the sealing surface (344) and the sealing element (346).

7. Device (120) as claimed in claim 6, where the sealing surface (344) comprises an extension plane which is parallel to the extension plane of the sealing wall (334), wherein a dimension of the sealing surface (344) transversely to the transverse axis (x) is greater than a predefined admissible offset (Δy) of the door (112) transversely to the transverse axis (x) with reference to a reference object.

8. Device (120) as claimed in either of claims 6 to 7, where the sealing element (346) is formed as a sealing lip, a sealing balloon, a double balloon and/or a double lip.

9. Device (120) as claimed in one of the preceding claims, where the extrusion profile (330) comprises an attachment portion (348) for attaching the device (120) to the door (112), wherein the attachment portion (348) is connected to the door leaf wall (332) and extends along the transverse axis (x) in the direction away from the sealing wall (334).

10. Door system (110) for a vehicle (100), wherein the door system (110) comprises the following features:
a door (112) having at least one door leaf (114), **characterised in that** a device (120) as claimed in one of the preceding claims is arranged on an impact edge of at least one door leaf (114).

11. Door system (110) as claimed in claim 10, having at least one molded part (2000), wherein the molded part (2000) functions as a transition between a door seal (2010) of a door leaf (114) of the door (112) and the device (120).

12. Method (200) for producing a device (120) for protection against entrapment for a door (112) for a vehicle (100), wherein the method (200) comprises the following steps:
extrude (210) elastomer material to form an extrusion profile (330), wherein the extrusion profile (330) comprises a door leaf wall (332) which, with the device (120) in a state mounted on the door (112), faces an impact edge of a door leaf (114) of the door (112), a sealing wall (334) which is arranged opposite with reference to the door leaf wall (332) and an actuating plunger (338) for transmitting a compression force (F) into the extrusion profile (330), wherein the actuating plunger (338) is arranged on the sealing wall (334) and extends away from the door leaf wall (332) along a transverse axis (x) of the extrusion profile (330), wherein the actuating plunger (338) is designed to be set into a movement with at least one movement component along the transverse axis (x) and/or with at least one movement component transverse to the transverse axis (x) upon contact with an entrapped object;
integrating (220) at least one reinforcement element (360) and at least one switching element (350) for detecting a compression of the extrusion profile (330) into the extrusion profile (330), wherein the at least one switching element (350) is arranged between the door leaf wall (332) and the actuating plunger (338) in the region of the actuating plunger (338), wherein the switching element (350) has a first electrically conductive portion (352) and a second electrically conductive portion (356) which are separated from one another by an intermediate space which is compressible by the compression force (F), wherein the reinforcement element (360) is integrated in the actuating plunger (338) and/or in a part portion of the extrusion profile (330) adjacent to the sealing wall (334), wherein the reinforcement element (360) is designed as a metal wire, metal band or the like, wherein the reinforcement element (360) functions as a cut protection device, as a vandalism protection device or the like; and
cut (230) the extrusion profile (330) to a desired length, wherein the switching element (350) is cut to length with the extrusion profile (330).

13. Method (200) as claimed in claim 12, where the step (210) of extrusion and the step (220) of integration are carried out jointly, wherein the switching element (350) is extruded with the elastomer material, and/or where in the step (220) of integration, the switching element (350) and/or a further switching element is vapor deposited onto the elastomer material.

## Revendications

1. Dispositif (120) de protection contre le pincement pour une portière (112) pour un véhicule (100), dans lequel le dispositif (120) présente les caractéristiques suivantes :
un profilé d'extrusion (330), dans lequel le profilé d'extrusion (330) est extrudé à partir d'un matériau élastomère, dans lequel le profilé d'extrusion (330) présente une paroi de battant de portière (332) qui, dans un état monté sur la portière (112) du dispositif (120), est orientée vers un bord de butée d'un battant de portière (114) de la portière (112), une paroi d'étanchéité (334) disposée en vis-à-vis de la paroi de battant de portière (332) et un poussoir de commutation (338) pour transmettre une force de compression (F) dans le profilé d'extrusion (330), dans lequel le poussoir de commutation (338) est disposé sur la paroi d'étanchéité (334) et s'étend le long d'un axe transversal (x) du profilé d'extrusion (330) à l'écart de la paroi de battant de portière (332), dans lequel le poussoir de commutation (338) est conçu pour être décalé avec au moins une composante de mouvement le long de l'axe transversal (x) et/ou avec au moins une composante de mouvement transversale à l'axe transversal (x) en cas de contact avec un objet pincé ;
au moins un élément de commutation (350) pour détecter une compression du profilé d'extrusion (330), dans lequel le au moins un élément de commutation (350) est disposé dans la zone du poussoir de commutation (338) entre la paroi de battant de portière (332) et le poussoir de commutation (338), dans lequel l'élément de commutation (350) présente une première section électriquement conductrice (352) et une seconde section électriquement conductrice (356) qui sont séparées l'une de l'autre par un espace intermédiaire compressible par la force de compression (F), dans lequel le au moins un élément de commutation (350) est intégré dans le profilé d'extrusion (330) et peut être extrudé et sectionné avec le profilé d'extrusion (330) ; **caractérisé en ce qu'**au moins un élément de raidissement (360) est prévu,
dans lequel l'élément de raidissement (360) est intégré dans le profilé d'extrusion (330), dans lequel l'élément de raidissement (360) est intégré dans le poussoir de commutation (338) et/ou dans une section partielle du profilé d'extrusion (330) voisine de la paroi d'étanchéité (334), dans lequel l'élément de raidissement (360) est réalisé en tant que fil métallique, bande métallique ou similaire, dans lequel l'élément de raidissement (360) fait office d'appareil de protection contre les coupures, d'appareil de protection contre le vandalisme ou similaire.

2. Dispositif (120) selon la revendication 1, avec une nervure de montage (336), dans lequel la nervure de montage (336) s'étend le long de l'axe transversal (x) du profilé d'extrusion (330), dans lequel la paroi de battant de portière (332) et la paroi d'étanchéité (334) sont connectées l'une à l'autre par l'intermédiaire de la nervure de montage (336), et dans lequel la nervure de montage (336) est disposée de manière décalée le long d'un plan d'extension de la paroi d'étanchéité (334) par rapport au poussoir de commutation (338).

3. Dispositif (120) selon l'une quelconque des revendications précédentes, dans lequel la première section (352) est disposée sur la paroi d'étanchéité (334) au niveau du poussoir de commutation (338) orientée vers la paroi de battant de portière (332) et la seconde section (356) est disposée entre la première section (352) et la paroi de battant de portière (332) par rapport à l'axe transversal (x), ou dans lequel l'espace intermédiaire compressible par la force de compression (F) s'étend le long de l'axe transversal (x).

4. Dispositif (120) selon l'une quelconque des revendications précédentes, dans lequel la seconde section (356) de l'élément de commutation (350) est disposée sur une paroi intermédiaire (342) ou en tant que section partielle d'une paroi intermédiaire (342) entre la paroi d'étanchéité (334) et la paroi de battant de portière (332).

5. Dispositif (120) selon l'une quelconque des revendications précédentes, dans lequel un rapport entre une dimension (b) du poussoir de commutation (338) le long de l'axe transversal (x) et une dimension (a) de la première section (352) de l'élément de commutation (350) le long de l'axe transversal (x) présente une valeur prédéfinie.

6. Dispositif (120) selon l'une quelconque des revendications précédentes, dans lequel le profilé d'extrusion (330) présente une surface d'étanchéité (344) et un élément d'étanchéité (346), dans lequel la surface d'étanchéité (344) et l'élément d'étanchéité (346) sont connectés à la paroi d'étanchéité (334) et s'étendent à l'écart de la paroi de battant de portière (332), dans lequel le poussoir de commutation (338) est disposé entre la surface d'étanchéité (344) et l'élément d'étanchéité (346).

7. Dispositif (120) selon la revendication 6, dans lequel la surface d'étanchéité (344) présente un plan d'extension qui est parallèle au plan d'extension de la paroi d'étanchéité (334), dans lequel une dimension de la surface d'étanchéité (344) transversale à l'axe transversal (x) est supérieure à un décalage (Δy) admissible prédéfini de la portière (112) transversalement à l'axe transversal (x) par rapport à un objet de référence.

8. Dispositif (120) selon l'une quelconque des revendications 6 à 7, dans lequel l'élément d'étanchéité (346) est formé en tant que lèvre d'étanchéité, ballon d'étanchéité, double ballon et/ou double lèvre.

9. Dispositif (120) selon l'une quelconque des revendications précédentes, dans lequel le profilé d'extrusion (330) présente une section d'application (348) pour appliquer le dispositif (120) à la portière (112), dans lequel la section d'application (348) est reliée à la paroi de battant de portière (332) et s'étend le long de l'axe transversal (x) à l'écart en direction de la paroi d'étanchéité (334).

10. Système de portière (110) pour un véhicule (100), dans lequel le système de portière (110) présente les caractéristiques suivantes :
une portière (112) avec au moins un battant de portière (114), **caractérisé en ce qu'**un dispositif (120) selon l'une quelconque des revendications précédentes est disposé sur un bord de butée d'au moins un battant de portière (114).

11. Système de portière (110) selon la revendication 10, avec au moins une pièce moulée (2000), dans lequel la pièce moulée (2000) fait office de transition entre un joint de portière (2010) d'un battant de portière (114) de la portière (112) et le dispositif (120).

12. Procédé (200) de fabrication d'un dispositif (120) de protection contre le pincement pour une portière (112) pour un véhicule (100), dans lequel le procédé (200) présente les étapes suivantes :
extrusion (210) de matériau élastomère en un profilé d'extrusion (330), dans lequel le profilé d'extrusion (330) présente une paroi de battant de portière (332) qui, dans un état monté sur la portière (112) du dispositif (120), est orientée vers un bord de butée d'un battant de portière (114) de la portière (112), une paroi d'étanchéité (334) disposée en vis-à-vis de la paroi de battant de portière (332) et un poussoir de commutation (338) pour transmettre une force de compression (F) dans le profilé d'extrusion (330), dans lequel le poussoir de commutation (338) est disposé sur la paroi d'étanchéité (334) et s'étend le long d'un axe transversal (x) du profilé d'extrusion (330) à l'écart de la paroi de battant de portière (332), dans lequel le poussoir de commutation (338) est conçu pour être décalé avec au moins une composante de mouvement le long de l'axe transversal (x) et/ou avec au moins une composante de mouvement transversale à l'axe transversal (x) en cas de contact avec un objet pincé ;
intégration (220) d'au moins un élément de raidissement (360) et d'au moins un élément de commutation (350) pour détecter une compression du profilé d'extrusion (330) dans le profilé d'extrusion (330), dans lequel le au moins un élément de commutation (350) est disposé dans la zone du poussoir de commutation (338) entre la paroi de battant de portière (332) et le poussoir de commutation (338), dans lequel l'élément de commutation (350) présente une première section électriquement conductrice (352) et une seconde section électriquement conductrice (356) qui sont séparées l'une de l'autre par un espace intermédiaire compressible par la force de compression (F), dans lequel l'élément de raidissement (360) est intégré dans le poussoir de commutation (338) et/ou dans une section partielle du profilé d'extrusion (330) voisine de la paroi d'étanchéité (334), dans lequel l'élément de raidissement (360) est réalisé en tant que fil métallique, bande métallique ou similaire, dans lequel l'élément de raidissement (360) fait office d'appareil de protection contre les coupures, appareil de protection contre le vandalisme ou similaire ; et
sectionnement (230) du profilé d'extrusion (330) à une longueur souhaitée, dans lequel l'élément de commutation (350) est sectionné à longueur avec le profilé d'extrusion (330).

13. Procédé (200) selon la revendication 12, dans lequel l'étape (210) de l'extrusion et l'étape (220) de l'intégration sont réalisées conjointement, dans lequel l'élément de commutation (350) est extrudé avec le matériau élastomère, et/ou dans lequel, à l'étape (220) de l'intégration, l'élément de commutation (350) et/ou un élément de commutation supplémentaire est déposé par évaporation sur le matériau élastomère.
